(19) Europäisches Patentamt
European Patent Office
Office européen des brevets

(11) Publication number: **0 079 779**
**B1**

(12) **EUROPEAN PATENT SPECIFICATION**

(45) Date of publication of patent specification: **17.09.86**

(21) Application number: **82306047.0**

(22) Date of filing: **12.11.82**

(51) Int. Cl.⁴: **B 01 J 27/16**, B 01 J 23/00, B 01 J 21/00, B 01 J 29/04, B 01 J 37/02, C 10 G 47/12

(54) **Hydrocarbon conversion catalysts, methods of making them and their uses in hydrocarbon conversion.**

(30) Priority: **13.11.81 US 320863**
**13.11.81 US 320864**
**13.11.81 US 320865**
**13.11.81 US 320866**

(43) Date of publication of application:
**25.05.83 Bulletin 83/21**

(45) Publication of the grant of the patent:
**17.09.86 Bulletin 86/38**

(84) Designated Contracting States:
**AT BE CH DE FR GB IT LI NL SE**

(56) References cited:
**WO-A-82/02677**
**US-A-3 617 528**
**US-A-3 706 693**
**US-A-3 725 243**
**US-A-4 243 556**
**US-A-4 277 373**

(73) Proprietor: **AMOCO CORPORATION**
**200 East Randolph Drive**
**Chicago Illinois 60601 (US)**

(72) Inventor: **Miller, Jefferey Templeton**
**2039 Springside Drive**
**Naperville Illinois 60565 (US)**
Inventor: **Baird, Michael Jefferson**
**915 Stonehenge Court**
**Naperville Illinois 60540 (US)**
Inventor: **Hensley, Albert Lloyd, Jr.**
**1204 35th Street**
**Munster Indiana 46321 (US)**
Inventor: **Gutberlet, Louis Charles**
**1520 East Wakeman Avenue**
**Wheaton Illinois 60187 (US)**
Inventor: **Nevitt, Thomas Dickey**
**4 S 575 Karns Road**
**Naperville Illinois 60540 (US)**
Inventor: **Hopkins, Paul Donald**
**1402 South 7th Street**
**St. Charles Illinois 60174 (US)**
Inventor: **Tait, Andrew Martin**
**5 South 414 N. Columbia Street**
**Naperville Illinois 60540 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 079 779 B1

(74) Representative: **Laredo, Jack Joseph et al**
**Elkington and Fife High Holborn House 52/54**
**High Holborn**
**London, WC1V 6SH (GB)**

**Description**

Background of the invention

This invention relates to improved catalytic compositions having utility in hydrocarbon conversion processes. In a specific aspect, the invention relates to improved catalytic compositions having utility in hydrogen treating of hydrocarbon feed materials.

Catalytic compositions containing a catalytically active metallic component deposed on a non-zeolitic, refractory inorganic oxide support are well known as are numerous uses therefor. Familiar examples include petroleum and synthetic crude oil hydrotreating and hydrocracking catalyst comprising a Group VIB and/or VIII metal such as cobalt, nickel, molybdenum and/or tungsten deposed on a non-zeolitic, refractory inorganic oxide such as alumina, silica, magnesia, etc. and olefin polymerization catalysts comprising a Group VIB metal deposed on silica or silica-alumina supports.

It also is known that the activity or performance of catalysts of the type described hereinabove for reactions such as hydrocracking, disproportionation and oligomerization can be improved or modified by inclusion in the catalyst of a crystalline molecular sieve zeolite component. Thus US—A—3,649,523 (Bertolacini et al.) discloses a hydrocarbon conversion process, and particularly hydrocracking and disproportionation of petroleum hydrocarbon feed materials, carried out in the presence of improved catalysts comprising a metallic component having hydrogenating activity deposed on a support component comprising a large pore crystalline aluminosilicate and a porous support material such as alumina, silica or aluminum phosphate. US—A—3,894,930 and US—A—4,054,539 (both Hensley) disclose hydrocracking in the presence of improved catalysts comprising a metallic hydrogenating component and a support component comprising ultrastable large pore crystalline aluminosilicate and silica-alumina. US—A—3,876,522 (Campbell et al.) discloses preparation of lube oils by a process that includes a hydrocracking step in which there are employed catalysts containing a composite of a crystalline aluminosilicate zeolite component and a porous refractory oxide component such as alumina or silica, such composite containing deposited or exchanged catalytic metals. US—A—4,029,601 (Wiese) discloses oligomerization of alkenes using a cobalt oxide-active carbon composite supported on a refractory oxide such as silica or alumina and/or crystalline aluminosilicate zeolites. Other processes in which catalysts comprising catalytically active metals and a support component comprising a porous oxide and a crystalline molecular sieve zeolite are useful include isomerization of alkylaromatics and alkylation of aromatics and paraffins.

It also is known that the performance of various catalysts containing catalytically active metals deposed on a non-zeolitic, refractory inorganic oxide support component can be improved or modified by inclusion of phosphorus in the catalytically active metallic component or through the use of phosphorus compounds in catalyst preparation. For example, US—A—3,287,280 (Colgan et al). discloses that the use of phosphoric acid solutions of nickel and/or molybdenum salts to impregnate non-zeolitic supports such as alumina or silica leads to improved dispersion of catalytically active metals on the support surface and improved results in hydrodesulfurization of petroleum hydrocarbon feeds. The patentee also discloses that phosphoric acid residues remaining in the catalyst impart thermal stability thereto. US—A—3,840,472 (Colgan) contains a similar disclosure with respect to the use of phosphoric acid impregnating solutions of active metal salts. US—A—4,165,274 (Kwant) discloses a two-step process for hydrotreating and hydrocracking tar sands oils wherein hydrotreating takes place in a first stage in the presence of an alumina-supported, fluorine and phosphorus-containing nickel-molybdenum catalyst, after which hydrocracking is conducted in the presence of a catalyst-containing nickel and tungsten supported on a low-sodium, Y-type molecular sieve support component. US—A—3,985,676 (Rekers et al.) discloses catalysts for polymerization of olefins prepared by deposition of various organophosphorus compounds of chromium onto high surface area non-zeolitic supports such as silica or silica-alumina followed by thermal activation of the result.

Notwithstanding similarities in the basic catalytic composition—catalytically active metal component deposed on non-zeolitic refractory inorganic oxide support component—into which phosphorus or crystalline molecular sieve zeolite components have been incorporated according to the above-described proposals, the reported effects of the zeolite and phosphorus components are, in many respects, sufficiently unrelated as to mitigate against attempting to combine the effects of the components into a single catalyst. For example, the improved hydrocracking activity of the above-described zeolite-containing catalyst typically would not be desired in a hydrodesulfurization or hydrodenitrogenation catalyst because in typical hydrotreating processes employing such catalysts, it is preferred to limit cracking. Similarly, the improved hydrodesulfurization activity of phosphorus-promoted catalysts such as those of Colgan et al. would be of little consequence within the context of a cracking, alkylation, isomerization or disproportionation process. On the other hand, we have previously found that a phosphorus component incorporated into the hydrogenating component of certain hydrotreating catalyst exerts a promotional effect with respect to denitrogenation of high nitrogen feeds while crystalline molecular sieve zeolite components incorporated into catalysts containing similar active metals but free of phosphorus exerts a promotional effect with respect to denitrogenation and hydrocracking reactions.

It also is known from Rabo, *Zeolite Chemistry and Catalysis*, ACS Monograph 171, American Chemical Society, pages 294—297 (1976), that many crystalline molecular seive zeolites possess only limited stability

with respect to strong acids such as the phosphoric acid used according to Colgan et al. Accordingly, it can be speculated that attempts to combine the promotional effects of phosphoric acid and crystalline molecular sieve zeolites have been limited by concern over destruction of the zeolite component.

US—A—3,617,528 (Hilfman), which is directed to preparation of supported nickel-containing catalysts by coextrusion of a phosphoric acid solution of nickel or nickel and Group VIB metal compounds and an alumina-containing carrier, suggests the use of carriers containing silica and alumina that are amorphous or zeolitic in nature. Column 2 lines 39—43. Crystalline aluminosilicate zeolites specifically disclosed by Hilfman are mordenite, faujasite and Types A and U molecular sieves. Column 3 lines 42—46. Hilfman does not address the effect of the acid on zeolite integrity or crystallinity, nor is there any disclosure or suggestion as to whether any zeolite employed in the disclosed preparations would remain intact in the final catalyst. In fact, none of the disclosed crystalline aluminosilicate zeolites, or any other for that matter, is employed in the patentee's examples. Further, US—A—3,706,693 (Mickelson et al. '693) and US—A—3,725,243 (Hass et al.) teach that exposure of zeolites to strong acids such as phosphoric acid destroys zeolite crystallinity and integrity. In fact, both Mickelson et al. '693 and Hass et al. are directed specifically to catalyst preparations in which impregnation of crystalline aluminosilicate-containing supports for phosphoric acid solutions of salts of hydrogenating metals results in destruction of zeolite crystallinity. Further, three of the four crystalline aluminosilicate zeolites specifically disclosed by Hilfman (faujasite, mordenite and Type A molecular sieve) are included among the crystalline aluminosilicate zeolites that are preferred for use in Mickelson et al.'s and Hass et al.'s zeolite-destructive preparations. The aforesaid Rabo publication teaches that among Zeolite A, faujasite and mordenite, only the latter exhibits appreciable acid stability.

US—A—3,905,914 (Jurewicz et al). is directed to preparation of oxidation catalysts and mixing a vanadium compound, zirconium salt and hydrogen halide, and then adding phosphoric acid or a compound hydrolyzable to phosphoric acid. The result is refluxed to form a gel which then is dried, or "used to impregnate a suitable carrier, such as alumina, alundum, silica, silicon carbide, silica-alumina, zirconia, zirconium phosphate and/or a zeolite." Column 2 lines 47—51. Jurewicz et al. does not identify any zeolites nor do the patentee's examples illustrate preparation of a supported catalyst. Also, no consideration is given to acid stability of zeolites and there is no indication whether any zeolite used in the disclosed catalyst preparation would remain intact.

Similar to the Mickelson et al. '693 and Hass et al. patents discussed hereinabove, US—A—3,749,663, 3,749,664 and 3,755,150 (all Mickelson) are directed to impregnation of support materials with phosphoric acid solutions of salts of catalytically active metals. Although none of these patents discloses impregnation of support materials containing a zeolite component, each patent expressly cautions against exposure of supports containing aluminum ions to phosphoric acid at relatively low pH stating that reaction of the acid and aluminum degrades the support, fouls the impregnation solution and results in formation of undesirable chemical forms in the finished catalyst. (See Mickelson '663 at Column 8 lines 60—69, Mickelson '664 at Column 8 lines 6—15, Mickelson '150 at Column 9 lines 12—21.)

US—A—3,836,561 (Young) also deals with acid treatment of crystalline aluminosilicate zeolites. According to Young, alumina-containing compositions, including those containing crystalline aluminosilcate zeolites, are reacted with aqueous acids including hydrochloric, sulfuric, nitric, phosphoric and various organic acids, at a pH below 5 in the presence of an ionizable salt that is soluble in the aqueous phase, and then the result is washed, dried and calcined. The result of such treatment is removal of aluminum from the alumina-containing composition, replacement thereof with metallic cations if the ionizable salt is one containing cations that can be exchanged into the zeolite, increased porosity and decreased bulk volume of the catalyst. The resulting compositions are said to have utility as absorbents, ion exchange resins, catalysts and catalyst supports. Acid-stable zeolites and the effects of acid treatment on zeolite crystallinity are discussed at Column 2 lines 61—68. Of course, Young's acid treatment differs from the use of phosphoric acid according to the patents discussed hereinabove in that Young's purpose is to remove aluminum from the composition rather than to incorporate phosphorus into it. It also differs from the patents discussed hereinabove in that the disclosed compositions lack a catalytically-active metallic component deposed on the alumina-containing carrier.

Other patents and publications that may be of interest to the present invention in disclosing treatment of crystalline molecular sieve zeolites or compositions containing the same with phosphoric acid and other phosphorus compounds to incorporate phosphorus into the zeolite are US—A—3,962,364 (Young) and US—A—4,274,982, 4,276,437 and 4,276,438 (all Chu). According to these patents, suitable phosphorus compounds include halides, oxyhalides, oxyacids, and organophosphorus compounds such as phosphines, phosphites and phosphates. Incorporation of phosphorus according to these patents is reported to improve para-selectivity in alkylation reactions. Chu '982 further discloses treatment of the phosphorus-containing zeolites with magnesium compounds. Chu '437 discloses impregnation of the phosphorus treated compositions with solutions of gallium, iridium or thallium compounds. Chu '438 contains a similar disclosure with respect to impregnation of compounds of silver, gold and copper. Both patents disclose use of acid solutions of the metals as impregnating solutions, with hydrochloric, sulfuric and nitric as well as various organic acids being disclosed. None of these patents discloses or suggests the use of phosphoric acid impregnating solutions nor is there any suggestion of a catalyst containing an active

metallic component which contains phosphorus. Rather, the respective patentees' phosphorus is incorporated into the zeolite.

GB—A—1,555,928 (Kouwenhaven et al.) discloses crystalline silicates of specified formula having utility in a wide range of hydrocarbon conversions. Impregnation of the silicates with catalytic metals is disclosed as is promotion or modification with halogens, magnesium, phosphorus, boron, arsenic or antimony, (Page 6 lines 33—54); with incorporation of phosphorus into the silicate to improve alkylation selectivity, as in the above-described Chu patents, being specifically disclosed.

It also is known that phosphine or other organo-phosphorus complexes of various metal salts can be employed in preparation of various supported catalyst compositions. For example, US—A—3,703,561 (Kubicek et al.) discloses catalysts for olefin disproportionation comprising a reaction product of (1) an organoaluminum halide, aluminum halide or combination thereof with each other or with another organometallic halide and (2) a mixture of a salt of copper, silver or gold with a complexing agent which may be an organophosphine. Reaction of components (1) and (2) is conducted in the presence of a solvent for the reactants, in the substantial absence of air and at temperatures low enough to avoid decomposition of the reactants. It also is disclosed to provide the catalysts in supported form by impregnating a support such as a non-zeolitic, refractory inorganic oxide or a zeolite with the reaction product, or by impregnation with one of the reactants followed by addition of the other. Kubicek et al. also states that if such supported catalysts are to be activated by calcination the calcination should take place prior to impregnation with the active species, i.e., the reaction product of components (1) and (2). It is unclear whether residues of any organophosphine compound used in preparation of the catalysts of Kubicek et al. would remain in association with the active metallic species. In any event, the catalyst preparation according to this patent is conducted under conditions designed to avoid conversion of any such organophosphine residues to an oxygenated phosphorus component such as that required according to the present invention.

US—A—3,721,718 (Hughes et al.) and US—A—4,010,217 (Zuech) contain disclosures similar to that of Kubicek et al. with respect to use of organophosphorus complexes of various metal salts in preparation of olefin disproportionation catalysts. Like Kubicek et al., both Hughes et al. and Zuech contemplate supported catalysts; however, both patentees also state that if activation by calcination is desired, it should be accomplished by calcination of support prior to incorporation of active metals.

Another patent disclosing the use of metal complexes in catalyst preparation is U.S. 3,849,457 (Haag et al.) which is directed to preparation of carboxylic acids by hydrogenolysis of esters. The catalysts of Haag et al. comprise a hydrogenating metal component and a solid acid component such as a zeolite which components may be employed as a loose physical admixture or by combining the two components into a single particle. Various methods for combining the two components into a single particle are disclosed at Column 6 line 64—Column 7 line 44. One of these involves mixing a solution of a metal pi-complex with the acid solid and then decomposing the complex to form elemental metal and depositing the elemental metal onto the acid solid. A specific metal complex employed in this preparative scheme is tetra(triphenylphosphine)palladium(II) dibromide. Another preparative method useful with respect to zeolitic acid solid components involves incorporation of the hydrogenation component by conventional methods such as ion exchange or impregnation. None of the disclosed methods would result in association of an oxygenated phosphorus component with the metallic component of the patentee's catalyst.

US—A—4,070,403 (Homeier) discloses a hydroformylation catalyst comprising a cobalt compound and a zeolite-alumina hydrosol dispersion. The cobalt compound is chemically bonded to the alumina-zeolite dispersion by a vapor-phase impregnation technique. Suitable cobalt components of the disclosed catalysts include various salts such as halides, nitrate and various carboxylates as well as organophosphine complexes. Homeier does not disclose or suggest the presence of an oxygenated phosphorus component in the final catalyst, nor does the patentee attribute any promotional effect to phosphorus.

It can be appreciated from the foregoing that efforts to include both a crystalline molecular sieve zeolite component and a phosphorus component in catalysts comprising an active metal component deposed on a non-zeolitic refractory inorganic oxide component in such a manner that the promotional effects of both the phosphorus and the zeolite are retained have been largely unsuccessful. In those instances in which an attempt has been made to incorporate a promoting phosphorus component through the use of phosphoric acid impregnating solutions of compounds of active metals, such use of phosphoric acid in conjunction with a crystalline aluminosilicate zeolite-containing composition often results in destruction of the crystalline aluminosilicate zeolite component. Other proposals such as those involving use of organophosphorus complexes of various metal salts to aid impregnation or deposition of active metals into or onto support result in only incidental, if any, incorporation of phosphorus into the final catalyst, and phosphorus so incorporated appears lacking in promotional effect.

It would be desirable to provide an improved catalytic composition in which both phosphorus and crystalline molecular sieve zeolite components are present in a form capable of exerting a promotional effect. It is an object of this invention to provide an improved catalytic composition. A further object of the invention is to provide for the use of such catalytic compositions in hydrocarbon conversion processes. A still further object is to provide for the preparation of catalysts in which improved performance is attained through incorporation of crystalline molecular sieve zeolite and phosphorus components. Other objects of

the invention will be apparent to persons skilled in the art from the following description and the appended claims.

We have now found that the objects of this invention can be attained by incorporation of an oxygenated phosphorus component into the catalytically active metallic component of a catalytic composition and incorporation of selected crystalline molecular sieve zeolite components into the support component of the composition. Advantageously, the crystalline molecular sieve zeolite components of the invented catalysts are derived from acid-tolerant crystalline molecular sieve zeolites, and accordingly, phosphorus component can be incorporated without substantial destruction of zeolite integrity or crystallinity. Further, the phosphorus component is incorporated into the metallic component in a form capable of exerting a promotional effect. Thus, as demonstrated in the examples appearing hereinbelow, the catalysts of the invention, wherein an oxygenated phosphorus component is incorporated into a catalytically active metallic component which is deposed on or associated with a support component comprising at least one crystalline molecular sieve zeolite component and a non-zeolitic, refractory inorganic oxide matrix component, are superior to catalyst compositions that are identical but for the inclusion of a phosphorus component, or but for inclusion of the zeolite component, in a variety of catalytic processes. Accordingly, the overall effect of the phosphorus and zeolite components on performance of the basic catalytically active composition comprising a metallic component and a non-zeolitic, refractory inorganic oxide component is greater than the effect of either component alone in a variety of reactions.

In addition to the patents and publications discussed hereinabove, US—A—4,228,036 (Swift et al.) and US—A—4,277,373 (Sawyer et al.) may be of interest to the present invention in disclosing catalytic compositions containing phosphorus and zeolite components. Specifically, Swift et al. discloses an improved catalytic cracking catalyst comprising an alumina-aluminum phosphate-silica matrix composited with a zeolite component having cracking activity, such as a rare earth-exchanged Y-type crystalline aluminosilicate zeolite. Swift et al. does not disclose inclusion of an active metallic component into such catalysts. Further, in contrast to the catalysts of the present invention, wherein an oxygenated phosphorus component is included in an active metallic component, the phosphorus component of Swift et al.'s catalysts is included in a refractory oxide material.

Sawyer et al. discloses hydroprocessing catalysts comprising a Group VIB and/or VIII metal component composited with an ultrastable Y-type crystalline aluminosilicate zeolite and an alumina-aluminum fluorophosphate component. The catalyst also may contain an alumina gel-containing matrix. Although an essential component of Sawyer et al.'s catalyst is the aluminum fluorophosphate component of the support, it also is to be noted that patentee discloses use of phosphomolybdic acid to impregnate a support containing a Y-type crystalline aluminosilicate and alumina-aluminum fluorophosphate in Example 1 (see Column 5 lines 21—25). According to the example, however, it appears that there was no incorporation of a phosphorus component into the active metal component of the catalyst because the table at Column 5 lines 42—52 fails to report phosphorus content other than that contained in the aluminum fluorophosphate component of the support. Table 2 of Sawyer et al. also reports on a comparative catalyst C containing specified levels of alumina, Y-type zeolite, nickel oxide, molybdenum oxide, and phosphorus pentoxide. For catalysts C to have been a fair comparator for the catalysts of Sawyer et al.'s invention, the phosphorus pentoxide component must have been present in a manner similar to the fluorophosphate component of the patentee's catalysts, i.e., as part of the support. As such, Sawyer et al. fails to disclose or suggest a catalyst containing phosphorus as an essential part of the active metal component.

Further to the patents and publications discussed hereinabove, EP—A—70824 may also be considered as being prior art in the sense of Articles 54(3) and 54(4) in that it discloses a catalyst composition comprising i) a support consisting of a zeolite and a porous refractory oxide matrix and ii) an active component consisting of at least one metal having hydrocarbon conversion activity and an oxygenated phosphorus compound. The catalyst is prepared by impregnating a preformed support comprising a stabilised zeolite with a solution of metal salts and phosphonic acid and subsequently calcining the impregnated support. However, this European patent application does not disclose a catalyst whose support comprises a crystalline borosilicate nor is there a specific disclosure or even suggestion in the European patent application of the specific processes of the present invention.

## Description of the invention

In a first aspect the invention comprises a process for hydrocracking gas oil boiling range hydrocarbon feeds comprising contacting the feed with hydrogen under hydrocracking conditions in the presence of a catalyst comprising an active metallic component comprising at least one metal having hydrogenation activity and at least one oxygenated phosphorus component, and a support component comprising at least one non-zeolitic, porous refractory inorganic oxide matrix component selected from the group consisting of alumina, silica, zirconia, titania, magnesia and combinations thereof and at least one crystalline molecular sieve zeolite component, wherein the gas oil boiling range feed boils at 204 to 538°C (400° to 1000°F) and contains up to 0.1 wt% nitrogen and up to 2 wt% sulfur, and wherein the hydrocracking conditions comprise a temperature of from 343 to 455°C (650°F to 850°F) and a total pressure of from 6.89 to 20.7 MPa (1000 psi to 3000 psi).

In a second aspect the invention comprises a process for denitrogenation of high nitrogen content hydrocarbon feeds comprising contacting the feed with hydrogen under denitrogenation conditions in the

presence of a catalyst comprising an active metallic component comprising at least one metal having hydrogenation activity and at least one oxygenated phosphorus component, and a support component comprising at least one non-zeolitic, porous refractory inorganic oxide matrix component selected from the group consisting of alumina, silica, zirconia, titania, magnesia and combinations thereof and at least one crystalline molecular sieve zeolite component, wherein the high nitrogen content feed is a whole petroleum or synthetic crude oil, coal, shale or biomass liquid, or a fraction thereof containing at least 0.4 wt% nitrogen.

In a third aspect the invention provides a catalyst composition which comprises (1) an active metallic component comprising at least one metal having hydrocarbon conversion activity and at least one oxygenated phosphorus component; and (2) a support component comprising at least one non-zeolitic, porous refractory inorganic oxide matrix component and at least one shape selective crystalline molecular sieve zeolite component. According to a further aspect of the invention, such catalytic compositions are prepared by a method comprising (1) impregnating a support component comprising at least one non-zeolitic, refractory inorganic oxide matrix component and at least one acid-tolerant, crystalline molecular sieve zeolite component comprising a crystalline borosilicate zeolite with precursors of an active metallic component comprising at least one metal having hydrocarbon conversion activity and at least one oxygenated phosphorus component under conditions effective to retain substantial zeolite crystallinity; and (2) calcining the result to convert active metallic component precursors to active form. According to a still further aspect of the invention, the above described catalytic compositions are employed in hydrocarbon conversion processes in which a hydrocarbon-containing chargestock is contacted with the catalytic composition under mild hydrocarbon conversion conditions.

In greater detail, the invented catalytic composition comprises an active metallic component and a support component. Relative proportions of these are not critical so long as the active metallic component is present in at least a catalytically effective amount. Optimum proportions for a given catalyst will vary depending on intended use. Usefully, the active metallic component constitutes 5 to 50 wt% and the support constitutes 50 to 95 wt%, such weight percentages being based upon total weight of the catalytic composition.

The active metallic component of the invented catalyst comprises at least one metal having hydrocarbon conversion activity and at least one oxygenated phosphorus component. Suitable metals having hydrocarbon conversion activity include any of the metals typically employed to catalyze hydrocarbon conversion reactions such as those of Groups IB, II, IIIB—VIIB and VIII. These can be present in the catalyst in elemental form, as oxides, as sulfides, or in other active forms. Combinations also are contemplated. The Group VIB metals exhibit a high degree of susceptibility to promotion by oxygenated phosphorus component. Accordingly, preferred compositions are those in which the active metallic component comprises at least one Group VIB metal.

For a given catalyst, the preferred metal or combination of metals of the active metallic component will vary depending on end use. For example, in hydrogen processing of hydrocarbon feed materials such as petroleum or synthetic crude oils, coal or biomass liquids, or fractions thereof, preferred metals are those of Groups VIB and VIII such as chromium, molybdenum, tungsten, nickel, cobalt, iron, platium, rhodium, palladium, iridium and combinations thereof. Oxides and sulfides of these are most preferred from the standpoint of catalytic performance. In processes for denitrogenation hydrotreating or denitrogenation hydrocracking, combinations of nickel or cobalt with molybdenum and chromium give particularly good results. Particularly good results in hydrocracking processes are attained using catalysts containing combinations of cobalt and molybdenum, nickel and molybdenum, or nickel and tungsten as the metals of the active metallic component. In mild hydrocracking processes such as catalytic dewaxing and catalytic cracker feed hydrocracking processes, preferred metals of the metallic component are combinations of nickel and molybdenum.

In addition to the above-described catalytically active metal component, the active metallic component of the invented composition contains at least one oxygenated phosphorus component which may be present in a variety of forms such as one or more simple oxides, phosphate anions, complex species in which phosphorus is linked through oxygen to one or more metal or metals of the active metallic component or compounds of such metal or metals, or combinations of these. The specific form of the oxygenated phosphorus component is not presently known; accordingly, for purposes hereof, phosphorus contents are calculated and expressed in terms of $P_2O_5$.

Content of the metal and phosphorus components of the active metallic component is not critical although phosphorus component preferably is present in at least an amount effective to promote hydrocarbon conversion activity of the metal or metals of the metallic component. In general, the metal or metals of the metallic component, calculated as oxide of the metal or metals in a common oxidation state, e.g., $Cr_2O_3$, $MoO_3$, $WO_3$, NiO, CoO, make up 3 to 45 wt.% of the total catalyst weight while phosphorus component, expressed as $P_2O_5$, makes up 0.1 to 20 wt.% of the total catalyst. Within these broad ranges, preferred levels of metal and phosphorus component will vary depending on end use. For example, catalysts useful in hydrogen processing of petroleum or synthetic crude oils, coal or biomass liquids, or fractions thereof preferably contain 5 to 35 wt.% Group VIB and/or VIII metal, expressed as common metal oxide, and 0.5 to 15 wt.% oxygenated phosphorus component, expressed as $P_2O_5$. Of course higher and lower levels of metal and/or phosphorus component can be present; however, below 5 wt.% metal oxide,

hydrogenation activity can suffer while above 35 wt.%, improvements in activity typically do not compensate for the cost of the additional metal. Similarly, below 0.5 wt.% phosphorus component, calculated as $P_2O_5$, promotional effect may be insignificant while above 15 wt.%, the phosphorus component may adversely affect hydrogenation activity or performance. For high nitrogen feedstocks, the hydrogenating metal preferably makes up 10 to 40 wt.% of overall catalyst while phosphorus content as $P_2O_5$ makes up 0.5 to 15% of overall catalyst weight. For mild hydrocracking hydrogenating metal preferably makes up 5 to 30 wt.% of overall catalyst weight while phosphorus content as $P_2O_5$ makes up 0.1 to 10 wt.% of overall catalyst weight.

The support component of the invented catalytic composition comprises a non-zeolitic, refractory inorganic oxide matrix component and at least one crystalline molecular sieve zeolite component. Suitable non-zeolitic, refractory inorganic oxide matrix components are well known to persons skilled in the art and include alumina, silica, silica-alumina, alumina-silica, magnesia, zirconia, titania, etc., and combinations thereof. The matrix component also can contain adjuvants such as phosphorus oxides, boron oxides, fluorine and/or chlorine. Matrix components that are preferred are those comprising alumina, owing to the availability and strength thereof. More preferably, the matrix component is alumina, or a combination of alumina and silica.

The support component of the catalytic composition of the invention also comprises at least one crystalline molecular sieve zeolite component. This component of the support component is derived from at least one acid-tolerant crystalline molecular sieve zeolite. For purposes hereof, an acid-tolerant crystalline molecular sieve zeolite is defined as one that retains substantial crystallinity on exposure to phosphoric acid at pH down to about 3 to 4 and contains sufficiently low levels of cations capable of reacting with aqueous phosphoric acid to form insoluble metal phosphates capable of plugging the zeolite's pores as to avoid substantial plugging. Both naturally occurring the synthetic zeolites are contemplated. As with the metals of the metallic component of the invented catalysts, the specific zeolite component to be included in a given catalyst will vary depending on intended use of the catalytic composition. Examples of acid-tolerant, crystalline molecular sieve zeolites include faujasite-type crystalline aluminosilicate zeolites selected from the ultrastable Y-type crystalline aluminosilicate zeolites in acid and ammonium forms, AMS-type crystalline borosilicate zeolites, ZSM-type crystalline aluminosilicate zeolites and mordenite-type crystalline alumino-silicate zeolites.

The ultrastable crystalline aluminosilicate zeolites typically are faujasite-type zeolites that exhibit improved stability at elevated temperatures, such stability being imparted by exchanging original alkali metal cations with ammonium salt, calcining to convert the zeolite to hydrogen form, steaming or calcining again, exchanging with ammonium salt once again and finally calcining. Specific examples of ultrastable Y-type crystalline aluminosilicate zeolites include zeolite Z-14US, which is described in detail in U.S. 3,293,192 (Maher et al.) and U.S. 3,449,070 (McDaniel et al.). Y-type crystalline aluminosilicate zeolites in hydrogen or ammonium form also exhibit sufficient acid-tolerance as to be suitable for purposes of the present invention. When used in preparation of catalysts, Y-type zeolites in ammonium form are converted to acid form.

Crystalline borosilicate zeolites of the AMS-type are described in detail in commonly assigned U.S. 4,269,813 (Klotz). A specific example of this material is crystalline borosilicate zeolite AMS-1B which corresponds to the formula:

$$0.9\pm0.2\ M_{2/n}O:B_2O_3:YSiO_2:ZH_2O,$$

wherein M is at least one cation having a valence of n, Y ranges from 4 to about 600 and Z ranges from 0 to 160. AMS-1B provides an X-ray pattern that comprises the following X-ray diffraction lines and assigned strengths:

| d nm | (Å) | Assigned strength |
|---|---|---|
| 1.12±0.02 | 11.2±0.2 | W-VS |
| 1.00±0.02 | 10.0±0.2 | W-MS |
| 0.597±0.007 | 5.97±0.07 | W-M |
| 0.382±0.005 | 3.82±0.05 | VS |
| 0.370±0.005 | 3.70±0.05 | MS |
| 0.362±0.005 | 3.62±0.05 | M-MS |
| 0.297±0.002 | 2.97±0.02 | W-M |
| 0.199±0.002 | 1.99±0.02 | VW-M |

Crystalline aluminosilicate zeolites of the ZSM-type are well known and typically contain silica and alumina in a molar ratio of at least 12:1 ($SiO_2$:$Al_2O_3$) and have average pore diameters of at least 0.5 nm (5Å). Specific examples of crystalline aluminosilicate zeolites of the ZSM-type include crystalline aluminosilicate zeolite ZSM-5, which is described in detail in U.S. 3,702,886; crystalline aluminosilicate ZSM-11, which is described in detail in U.S. 3,709,979; crystalline aluminosilicate zeolite ZSM-11, which is described in detail in U.S. 3,832,449; crystalline aluminosilicate zeolite ZSM-35, which is described in detail in U.S. 4,016,245; and crystalline aluminosilicate zeolite ZSM-38, which is described in detail in U.S. 4,046,859.

Mordenite-type crystalline aluminosilicate zeolites also can be present in the catalytic composition of the present invention. Suitable mordenite-type crystalline aluminosilicate zeolites are disclosed in U.S. 3,247,098 (Kimberline), U.S. 3,281,483 (Benesi et al.) and U.S. 3,299,153 (Adams et al.) Synthetic mordenite-structure crystalline aluminosilicate zeolites, such as those designated Zeolon and available from the Norten Company of Worcester, Massachusetts, also are contemplated according to the invention.

Synthetic crystalline molecular sieve zeolites often are synthesized in alkali metal form, i.e., having alkali metal cations associated with framework species. For purposes of the present invention, the original form as well as various exchanged forms such as the hydrogen (acid), ammonium and metal-exchanged forms are suitable. Crystalline molecular sieve zeolites can be converted to acid form by exchange with acids or by indirect means which typically involve contacting with ammonium or amine salts to form ammonium-exchanged intermediate species which can be calcined to acid form. Metal-exchanged zeolites are well known as are methods for preparation thereof. Typically, zeolite is contacted with a solution or solutions containing metal cations capable of associating with framework metallic species. As noted hereinabove, crystalline molecular sieve zeolite components present in the catalysts of the present invention contain only insubstantial levels of metals capable of reacting with aqueous phosphoric acid to form insoluble metal phosphates capable of plugging the pores of the support component. Accordingly, preferred metal-exchanged crystalline molecular sieve zeolites are those in which the exchanged metals are nickel, cobalt, iron or a Group VIII noble metal. In catalysts intended for use in hydrogen processing of petroleum or synthetic crude oils, coal or biomass liquids, or fractions thereof, preferred crystalline molecular sieve zeolite components of the invented catalysts are those in acid or polyvalent metal ion-exchanged form, and especially the former.

Content of non-zeolitic, porous refractory inorganic acid matrix component and crystalline molecular sieve zeolite component in the support component of the invented composition are not critical. Broadly, the matrix component constitutes 5 to 95 wt% of the support, and likewise, the zeolite component can constitute 5 to 95 wt% of the support. Preferably, the content of the non-zeolitic matrix component is at least 10 wt% in order to ensure that the support component will exhibit sufficient strength and physical integrity to allow shaping of the component or final catalyst into a form suitable for intended use. Of course, even at less than 10 wt% matrix component, suitable catalytic performance can be attained in applications amenable to use of catalyst in finely divided form.

In terms of overall catalyst weight of the invented catalytic composition, preferred matrix content ranges from 10 to 90 wt% and preferred zeolite content ranges from 5 to 90 wt%. Within these ranges, precise levels of matrix and zeolite components that are more preferred for a given catalyst will vary depending on intended use. For use in mild hydrocracking, the matrix component content preferably ranges from 40 to 95 wt.% of the support while zeolite content ranges from 5 to 60 wt.% of the support component.

The support component of the invented catalytic composition can be prepared by any suitable method. A preferred method comprises blending acid-tolerant, shape selective zeolitic component, preferably in finely divided form, into a sol, hydrosol or hydrogel of at least one inorganic oxide and adding a gelling medium such as ammonium hydroxide with stirring to produce a gel. It also is contemplated to add the zeolite component to a slurry of the matrix component. In either case, the result can be dried, shaped if desired, and then calcined to form the support component. Suitable drying temperatures range from 27 to 177°C (80 to 350°F) and suitable drying times ranges from seconds to several hours. Calcination preferably is conducted at a temperature of 427 to 649°C (800 to 1,200°F) for 1/2 to 16 hours. Shaping of the support component can be conducted if desired, preferably after drying or calcining.

Another suitable method for preparing the support component of the invented composition comprises physically mixing particles of the matrix and zeolite components, each preferably in finely divided form, followed by thorough blending of the mixture.

The invented catalytic composition is preferred by a method comprising (1) impregnating the above-described support component with precursors to the active metallic component under conditions effective to retain substantial zeolite crystallinity; and (2) calcining the result.

Impregnation of support component with precursors to the active metallic component can be conducted in a single step or in a series of separate steps which may be separated by drying and/or calcination steps, provided that impregnation with at least one metal precursor takes place prior to or simultaneously with impregnation with phosphorus component precursor. If the active metallic component contains more than one metal, precursors can be impregnated simultaneously, in sequence or by various combinations of simultaneous and sequential impregnations. Phosphorus component precursor or precursors can be included with one or more of the metal precursors, or one or more separate

phosphorus component precursor impregnation steps can be included between or after the metal precursor impregnation steps. It also is contemplated to impregnate either the porous refractory inorganic oxide matrix component of the zeolitic component with precursors to the active metallic component and blend the result with the other component.

The mechanics of impregnating a support with metallic component precursors are well known to persons skilled in the art and typically involve contacting a support with one or more solutions of one or more precursors in amounts and under conditions effective to yield a final composition containing the desired amount of metal or metals. Suitable solvents for the impregnating solution or solutions include water and various low boiling alcohols in which the precursors are soluble. Water is preferred over alcohols from the standpoint of cost. In the case of simultaneous impregnations of metal and phosphorus component precursors a more preferred solvent is aqueous phosphoric acid.

Metal precursors useful in preparation of the invented catalytic compositions are well known to persons skilled in the art and include a wide range of salts and compounds of the metals that are soluble in the impregnating solvent and convertible to the desired form on calcination. Examples of useful salts include organic acid salts such as acetates, formates and propionates; nitrates; anhydrides; sulfates; and ammonium salts.

Useful precursors to the oxygenated phosphorus component are materials capable of reaction with the metal or metals of the metallic component, or compounds of such metal or metals, or precursors thereto, so as to incorporate into the metallic component or metallic component precursor a phosphorus-containing species that can be converted to an oxygenated phosphorus component. From the standpoint of maximizing the promotional effect of the oxygenated phosphorus component, the preferred phosphorus component precursor is one containing or capable of liberating phosphate anions as these are sufficiently reactive with the metal or metal precursors to yield the desired promotional effect. Specific examples of such phosphorus anion sources include phosphoric acid and salts thereof such as ammonium dihydrogen phosphate and diammonium hydrogen phosphate. Other phosphorus component precursors contemplated according to the invention, though less preferred from the standpoint of attaining maximum promotional effect, include organophosphorus compounds such as partial and full esters of the aforesaid oxyacids such as organophosphates and organophosphites; other organophosphorus compounds such as phosphines; and other phosphoric oxyacids such as phosphorus and phosphinic acids.

Impregnation of the support component with precursors to the metallic component is conducted under conditions effective to avoid substantial destruction of crystallinity of the crystalline molecular sieve zeolite component. Preferably, such conditions include a temperature that is high enough to maintain the metal and/or phosphorus component precursors in solution in the impregnating solvent though not so high as to decompose such precursors or have substantial adverse effects on the support component. More preferably, impregnating temperatures range from 4.5 to 93°C (40 to 200°F). pH of the impregnating solution or solutions to be used also is important from the standpoint of insuring retention of substantial zeolite crystallinity when phosphoric acid or other phosphate anion source is employed as a phosphorus component precursor and/or impregnating solvent. In such cases, pH preferably is sufficiently high that only insubstantial destruction of zeolite crystallinity takes place during the preparation. Of course, the precise pH at which substantial decomposition of crystallinity will occur will vary somewhat depending upon the choice of zeolite component. In general, however, pH should be above 2 in order to insure retention of sufficient zeolite crystallinity to insure desirable catalytic performance. Most preferably, pH ranges from 2.5 to 6 in order to insure retention of a high degree of zeolite crystallinity while also insuring the desired association of the phosphorus and metal components of the active metallic component.

Following impregnation of the support component with metallic component precursors, it is preferred to dry the impregnated support. It also is contemplated to dry the support subsequent to any intermediate impregnating steps in a multistep impregnation. Preferred drying temperatures range from 27 to 177°C (80 to 350°F), with preferred drying times ranging from a few seconds in spray drying operations to several hours in conventional driers.

Following impregnation of the support with precursors to the metallic component and any optional drying steps, the impregnated support is subjected to calcination in order to convert at least a portion of the metal or metals of the metallic component to the active form and to convert phosphorus precursors to oxygenated phosphorus component. Calcination is conducted in an atmosphere containing molecular oxygen at a temperature and for a period of time effective to attain the desired conversion. Preferably, calcination temperatures range from 427 to 649°C (800 to 1,200°F). Preferred calcination times range from 1/2 to 16 hours.

As a result of the above-described preparation, there is attained a catalytic composition comprising (1) a metallic component comprising at least one metal having hydrocarbon conversion activity and at least one oxygenated phosphorus component, and (2) a support component comprising at least one non-zeolitic, refractory inorganic oxide matrix component and at least one shape selective crystalline molecular sieve zeolite component. Preferred compositions are those in which the zeolite component exhibits at least 40% crystallinity as compared to compositions identical but for inclusion of phosphorus component. More preferably, such relative crystallinity is at least 75% in order to ensure desirable catalyst performance.

The compositions of this invention have utility in a wide range of hydrocarbon conversion processes in

which a chargestock comprising hydrocarbon is contacted with the catalyst under hydrocarbon conversion conditions. The invented catalysts are particularly useful in processes for hydrogen processing of hydrocarbon feed materials such as whole petroleum or synthetic crude oils, coal or biomass liquids, and fractions thereof. The process of the invention is described in further detail with reference to hydrogen processing of such feed materials.

Petroleum and synthethic crude oil feeds that can be hydrogen processed according to this aspect of the invention include whole petroleum, shale and tar sands oils, coal and biomass liquids and fractions thereof such as distillates, gas oils and residuals fractions.

Such feed materials are contacted with the catalyst of the invention under hydrogen processing conditions which will vary depending upon the specific feed to be processed as well as the type of processing desired. Broadly, hydrogen treating temperatures range from 177 to 455°C (350 to 850°F), hydrogen pressures range from 0.69 to 20.7 MPa (100 to 3000 psig) and feed linear hourly space velocities range from 0.1 to 10 volumes of feed per volume of catalyst per hour. Hydrogen addition rate generally ranges from 36 to 4450 $m^3/m^3$ (200 to 25,000 standard cubic feet per barrel (SCFB)).

Hydrocarbon feed materials treated under mild hydrocracking conditions are whole petroleum or synthetic crude oils, coal or biomass liquids, or fractions thereof. Substantial levels of impurities such as nitrogen, sulfur, oxygen and/or waxy components may be present in the feeds. Typical feeds contain up to 1.5 wt.% nitrogen and/or oxygen, up to 12 wt% sulfur and/or sufficient waxy components, e.g., n-paraffins and isoparaffins, to exhibit pour points of at least −1°C (30°F). Specific examples of useful feeds include heavy and light vacuum gas oils, atmospheric and vacuum distillates and deasphalted and hydrotreated residual fractions.

Mild hydrocracking conditions vary somewhat depending on the choice of feed as well as the type of processing to be conducted. Dewaxing mild hydrocracking conditions are employed when it is desired to reduce n-paraffin and isoparaffin content of the feed without subtantial cracking of desirable aromatics, naphthenes and branched paraffins. Dewaxing mild hydrocracking conditions preferably include a temperature of 343 to 427°C, (650 to 800°F), hydrogen pressure of 5.5 to 17.3 MPa (800 to 2500 psi), linear hourly space velocity (LHSV) of 0.2 to 5 and hydrogen addition rate of 178 to 3560 $m^3/m^3$ (1000 to 20,000 standard cubic feet per barrel (SCFB).

The catalytic dewaxing mild hydrocracking process can be included as part of a multistep process for preparation of lube oils wherein catalytic dewaxing is conducted in combination with other conventional processing steps such as solvent extraction, solvent dewaxing, hydrocracking or hydrotreating to obtain lube oil base stocks of relatively low pour point and high viscosity index and stability. According to a preferred aspect of the invention, however, there is provided an improved process for preparation of lube oil base stocks of high viscosity index, low pour point and sufficiently low sulfur and/or nitrogen content to exhibit good stability consisting essentially of catalytically dewaxing a feed, and preferably a petroleum or synthetic crude oil distillate fraction having a pour point of 10 to 65°C (50 to 150°F) and containing up to 5 wt% sulfur, 0.5 wt.% oxygen and/or 0.5 wt% nitrogen in the presence of the aforesaid catalyst. Conditions according to this aspect of the invention typically are somewhat more severe than those in catalytic dewaxing operations conducted as part of a multistep process. Preferred conditions according to this aspect of the invention include temperature ranging from 370 to 427°C, (700 to 800°F), pressure of 8.3 to 13.8 MPa (1200 to 2000 psi), LHSV of 0.2 to 2 reciprocal hours and hydrogen addition rate of 356 to 1780 $m^3/m^3$ (2000 to 10,000 SCFB). A preferred catalyst according to this aspect of the invention is one in which the shape selective zeolitic cracking component is a crystalline borosilicate component of the AMS-1B type in hydrogen form, and the hydrogenating metal of the active metallic component comprises a molybdenum component and a nickel component.

Catalytic cracking feed mild hydrocracking conditions are employed when it is desired to remove nitrogen and/or sulfur from the feed as well as crack hydrocarbon components thereof to lower boiling components. Such conditions include temperatures ranging from 343 to 405°C (650 to 760°F), hydrogen pressures ranging from 3.45 to 13.8 MPa (500 to 2000 psi), LHSV ranging from 0.2 to 4 reciprocal hours and hydrogen addition rates ranging from 178 to 3560 $m^3/m^3$ (1000 to 20,000 SCFB). Preferred catalytic cracking feed mild hydrocracking conditions include a temperature ranging from 365 to 395°C (690 to 740°F), hydrogen pressure of 5.5 to 11 MPa (800 to 1600 psi), LHSV of 0.5 to 1 reciprocal hour and hydrogen addition rate of 178 to 2670 $m^3/m^3$ (1000 to 15,000 SCFB).

The process can be conducted in either fixed or expanded bed operations using a single reactor or series thereof as desired.

Catalysts that are preferred for use in the mild hydrocracking process of the present invention are those in which the active metallic component comprises at least one metal of Group VIB or VIII, the non-zeolitic matrix component comprises alumina or silica-alumina and the shape selective crystalline molecular sieve zeolite component comprises a crystalline aluminosilicate zeolite of the ZSM-type or a crystalline borosilicate zeolite of the AMS-type, as these exhibit high activity for hydrogenation and cracking. More preferably, the hydrogenation metal of the active metallic component is nickel, cobalt, chromium, molybdenum or tungsten or a combination thereof and is present in an amount ranging from 10 to 30 wt% calculated as metal oxide and based on total catalyst weight. Preferred support compositions contain 60 to 90 wt% alumina or silica-alumina having dispersed therein 10 to 40 wt% shape selective crystalline molecular sieve zeolite.

Most preferably, the hydrogenating metal of the active metallic component of the catalyst employed comprises a combination of nickel and molybdenum. Best results in terms of mild hydrocracking are attained using catalysts containing 1 to 7 wt% NiO, 10 to 20 wt% $MoO_3$, 0.1 to 5 wt% oxygenated phosphorus component, calculated as $P_2O_5$, and a support comprising 65 to 85 wt% alumina having dispersed therein 15 to 35 wt% crystalline borosilicate zeolite of the AMS-type, especially HAMS-1B.

Hydrocarbon feed materials treated under hydrocracking conditions are gas oil boiling range hydrocarbons derived from petroleum or synthetic crude oils, coal liquids or biomass liquids. Preferred feeds are those boiling from 205 to 538°C (400 to 1000°F) and containing up to 0.1 wt% nitrogen and/or up to 2 wt% sulfur. Specific examples of preferred gas oil boiling range feeds include petroleum and synthetic crude oil distillates such as catalytic cycle oils, virgin gas oil boiling range hydrocarbons and mixtures thereof.

Hydrocracking conditions vary somewhat depending on the choice of feed and severity of hydrocracking desired. Broadly, conditions include temperatures ranging from 343 to 455°C (650 to 850°F), total pressures ranging from 6.9 to 20.7 MPa [1000 to 3000 psi], hydrogen partial pressures ranging from 2.07 to 17.25 MPa (300 to 2500 psi), linear hourly space velocities (LHSV) ranging from 0.2 to 10 reciprocal hours and hydrogen recycle rates ranging from 890 to 3560 $m^3/m^3$ (5,000 to 20,000 SCFB). Hydrogen consumption broadly ranges from 90 to 534 $m^3/m^3$ (500 to 3000 SCFB) under such conditions. Preferred conditions in hydrocracking of catalytic cycle oils, virgin gas oils, and combinations thereof to gasoline boiling range products include a temperature ranging from 357 to 413°C (675 to 775°F), total pressure of 10.3 to 17.25 MPa (1500 to 2500 psi), hydrogen partial pressure of 6.9 to 10.35 MPa (1000 to 1500 psi), space velocity of 0.5 to 4 reciprocal hours and hydrogen recycle rate of 1780 to 2670 $m^3/m^3$ (10,000 to 15,000 SCFB), with hydrogen consumption ranging from 178 to 356 $m^3/m^3$ (1000 to 2000 SCFB).

The process can be conducted in either fixed or expanded bed operations using a single reactor or series thereof as desired.

Catalysts that are preferred for use in the hydrocracking process of the present invention are those in which the active metallic component comprises at least one metal of Group VIB or VIII, the non-zeolitic matrix component comprises alumina, or silica-alumina and the crystalline molecular sieve zeolite component comprises a low sodium, ultrastable Y-type crystalline aluminosilicate zeolite, as these exhibit high activity for hydrogenation and cracking over prolonged periods of time. More preferably, the hydrogenation metal of the active metallic component is nickel, cobalt, chromium, molybdenum or tungsten or a combination thereof and is present in an amount ranging from 8 to 25 wt%, calculated as metal oxide and based on total catalyst weight. Preferred support compositions contain 40 to 80 wt% alumina or silica-alumina having dispersed therein 20 to 60 wt% low sodium, ultrastable Y-type crystalline alumino-silicate zeolite.

Most preferably, the hydrogenating metal of the active metallic component of the catalyst employed comprises a combination of cobalt and molybdenum, nickel and molybdenum or nickel and tungsten. Best results are attained using catalysts containing 0.5 to 6 wt% oxygenated phosphorus component, calculated as $P_2O_5$ and a hydrogenating component containing 1 to 4 wt%, Co0 or NiO and 8 to 15 wt% $Mo0_3$; or 1 to about 4 wt% NiO and 15 to 25 wt% $WO_3$; and a support comprising 50 to 70 wt% alumina or silica-alumina having dispersed therein 30 to 50 wt% low sodium ultrastable Y-type crystalline aluminosilicate zeolite component, such weight percentages of hydrogenating metal oxides being based on total catalyst weight, and such matrix and zeolite weight percentages being based on support weight.

Hydrocarbon feeds treated under denitrogenation, hydrotreating or hydrocracking conditions are those containing substantial levels of nitrogen compounds. Preferred feeds are those containing at least 0.4 wt% nitrogen. Specific examples of preferred high nitrogen feeds include whole shale oils and fractions thereof such as shale oil resids, vacuum and atmospheric distillates and naphtha fractions. Whole petroleum crude oils, tar sands oils, coal and biomass liquids suitably high in nitrogen, as well as various fractions thereof, also are particularly well suited for use.

Denitrogenation conditions vary somewhat depending on the choice of feed as well as the type of processing to be conducted. Denitrogenation hydrotreating conditions are employed when it is desired to reduce nitrogen content of the feed without substantial cracking thereof and include a temperature of 343 to 405°C (650 to 760°F), hydrogen pressure of 6.9 to 17.25 MPa (1000 to 2500 psi), linear hourly space velocity (LHSV) of 0.2 to 4 volumes of feed per volume of catalyst per hour ($hour^{-1}$) and hydrogen addition rate of 356 to 3560 $m^3/m^3$ (2000 to 20,000 standard cubic feet per barrel (SCFB). Preferred denitrogenation hydrotreating conditions include a temperature ranging from 360 to 399°C (680 to 750°F), hydrogen pressure of 9.7 to 15.2 MPa [1400 to 2200 psi] LHSV of 0.3 to 3 and hydrogen rate of 712 to 1780 $m^3/m^3$ (4000 to 10,000 SCFB) as these result in desirable reductions in product nitrogen while avoiding exposure of the catalyst to conditions so severe as to adversely affect catalyst lifetime.

Denitrogenation hydrocracking conditions are employed when it is desired to remove nitrogen from the feed as well as crack higher boiling components thereof to lower boiling components. Denitrogenation hydrocracking temperature ranges from 382 to 438°C (720 to 820°F), hydrogen pressure ranges from 6.9 to 17.25 MPa (1000 to 2500 psi), LHSV ranges from 0.2 to 3 and hydrogen addition rate ranges from 712 to 3560 $m^3/m^3$ (4,000 to 20,000 SCFB). A particularly preferred application in which denitrogenation hydrocracking conditions are employed is in conversion of whole shale oils or fractions thereof to jet fuel. Preferred conditions for such an application include a temperature ranging from 399 to 438°C (750 to 820°F),

hydrogen pressure of 8.3 to 15.2 MPa (1200 to 2200 psi), LHSV of 0.3 to 1 and hydrogen addition rate of 890 to 1780 $m^3/m^3$ (5000 to 10,000 SCFB).

The process can be conducted in either fixed or expanded bed operations using a single reactor or series thereof as desired.

Catalysts that are preferred for use in the denitrogenation hydrotreating or hydrocracking process are those in which the hydrogenating metal of the active metallic component is nickel, cobalt, chromium, molybdenum, tungsten or a combination thereof, the non-zeolitic matrix component comprises alumina or silica-alumina and the crystalline molecular sieve zeolite component comprises an ultrastable Y-type crystalline aluminosilicate zeolite, a crystalline aluminosilicate zeolite of the ZSM-type or a crystalline borosilicate zeolite of the AMS-type, as these exhibit high activity for denitrogenation hydrotreating and hydrocracking. More preferably, the hydrogenation metals of the active metallic component comprise a combination of nickel and molybdenum or a combination of cobalt or nickel, chromium and molybdenum and are present in an amount ranging from 10 to 30 wt% calculated as metal oxide and based on total catalyst weight, and the support component contains 40 to 80 wt% alumina or silica-alumina having dispersed therein 20 to 60 wt% crystalline molecular sieve zeolite component, such weight percentages being based on support weight.

Most preferably, the catalyst employed in the denitrogenation process contains 1 to 5 wt% NiO and 12 to 20 wt% $MoO_3$; or 1 to 5 wt% CoO or NiO, 2 to 10 wt% $Cr_2O_3$ and 12 to 20 wt% $MoO_3$; and 0.5 to 8 wt% oxygenated phosphorus component, expressed as $P_2O_5$; and a support containing a dispersion of 30 to 60 wt% ultrastable Y-type crystalline aluminosilicate zeolite, AMS-type crystalline borosilicate zeolite or ZSM-type crystalline aluminosilicate zeolite in 40 to 70 wt% alumina or silica-alumina. Ultrastable Y-type crystalline aluminosilicate zeolites give best results in denitrogenation hydrocracking applications.

The present invention is described in further detail in the following examples, it being understood that the same are for purposes of illustration and not limitation.

Example 1

A support component containing 30 wt.% ultrastable Y-type crystalline aluminosilicate zeolite obtained from the Davison Chemical Division of W. R. Grace and Co. dispersed in 70 wt.% alumina was prepared by mixing 15,890 g alumina sol (10.0 wt.% alumina dry weight) with 681 g ultrastable Y-type zeolite. To the result was added a solution of 400 ml water and 400 ml concentrated $NH_4OH$ while stirring rapidly to form a gel. The resulting gel was dried overnight at 121°C (250°F) in air, ground to 100 mesh, mulled with water, extruded to 1.98 mm (5/64") particles, dried overnight at 121°C (250°F) in air and calcined at 538°C (1000°F) in air for three hours.

A solution prepared by dissolving 8.30 g $(NH_4)_2Cr_2O_7$ in 49 ml water was added to 72.77 g of support component and allowed to stand for 1 hour after which the result was dried in air at 121°C (250°F) for 1 hour.

Subsequently, 18.40 g $(NH_4)_6Mo_7O_{24}\cdot 4H_2O$, 5.85 g $Co(NO_3)_2\cdot 6H_2O$ and 8.6 g 85% phosphoric acid ($H_3PO_4$) were dissolved in 35 ml water to form an impregnating solution having a pH of 3. The impregnating solution was added to the chromia-impregnated support and the mixture was allowed to stand for 1 hour after which the result was dried in air at 121°C (250°F) for 1 hour and calcined in air at 528°C (100°F) for 1 hour.

The resulting catalyst contained 5.0 wt% $Cr_2O_3$, 15.0 wt.% $MoO_3$, 1.5 wt.% CoO and 5.5 wt.% oxygenated phosphorus component, calculated as $P_2O_5$.

Example 2

A support component containing 50 wt.% ultrastable Y-type crystalline aluminosilicate zeolite (Davison) dispersed in 50 wt.% alumina was prepared substantially according to the procedure of Example 1 using 3863 g alumina sol (10 wt.% alumina) and 386.5 g ultrastable Y-type zeolite.

A solution prepared by dissolving 16.6 g $(NH_4)_2Cr_2O_7$ in 90 ml water was added to 148.98 g of the support component and allowed to stand for 1 hour. The result was dried in air at 121°C (250°F) for 1 hour and calcined in air at 538°C (1000°F) for 1 hour.

Subsequently, 36.8 g $(NH_4)Mo_7O_{24}\cdot 4H_2O$, 11.70 g $Co(NO_3)_2\cdot 6H_2O$ and 13.02 g 85% $H_3PO_4$ were dissolved in 67 ml water to form an impregnating solution having a pH of 3. This solution was added to the chromia-impregnated support and the result was allowed to stand for 1 hour after which the result was dried in air at 121°C (250°F) for 1 hour and calcined in air at 538°C (1000°F) for 1 hour.

The resulting catalyst contained 5.0 wt.% $Cr_2O_3$, 15.0 wt.% $MoO_3$, 1.5 wt.% CoO and 4.0 wt.% oxygenated phosphorus component, calculated as $P_2O_5$.

Example 3

An impregnating solution having a pH of 5.0 was prepared by dissolving 34.80 g cobalt nitrate, 42.45 g ammonium molybdate and 16.63 g phosphoric acid in 600 ml distilled water, after which total volume of the solution was brought to 660 ml with distilled water. The impregnating solution was added to 331 g of a premixed support component containing 41 wt.% ultrastable Y-type crystalline aluminosilicate zeolite and 59 wt.% silica-alumina and stirred vigorously for a short time. The result was dried in air at 121°C (250°F) for several hours, ground to pass a 28 mesh screen, formed into 3.18 mm (1/8") pellets and calcined in air for 1 hour at 260°C (500°F), for 1 hour at 399°C (750°F) and for 5 hours at 538°C (1000°F).

The resulting catalyst contained 9.13 wt.% $MoO_3$, 2.36 wt.% CoO and 2.3 wt.% phosphorus component, calculated as $P_2O_5$.

Example 4

A support component containing 35 wt.% ultrastable Y-type crystalline aluminosilicate zeolite (Davison) dispersed in 65 wt.% silica-alumina containing 71.7 wt.% silica was prepared in two batches by blending 4160 g of silica-alumina slurry containing about 2.5 wt.% solid with 54.4 g of the zeolite component for 5 to 10 minutes and then filtering, drying the solid in air at 121°C (250°F) overnight, grinding the dried solid to pass through a 30-mesh screen and calcining in air at 538°C (1000°F) for 3 hours.

An impregnating solution was prepared by dissolving 35.4 g cobalt nitrate, 41.6 g ammonium molybdate and 4.6 g phosphoric acid in 472 ml distilled water. 290 g of the support component were contacted with the impregnating solution after which the result was dried in air at 121°C (250°F) overnight, ground to 28 mesh, formed into 3.18 mm (1/8") pills and calcined in air at 260°C (500°F) for 1 hour, at 370°C (700°F) for 1 hour and at 538°C (1000°F) for 5 hours.

The resulting catalyst contained 2.6 wt.% CoO, 9.6 wt.% $MoO_3$ and 0.6 wt.% oxygenated phosphorus component, calculated as $P_2O_5$.

Example 5

147.84 g support component containing 20 wt.% AMS-type crystalline borosilicate zeolite dispersed in 80 wt.% alumina was impregnated with a solution prepared by dissolving 22.09 g $(NH_4)_2Mo_7O_{24}\cdot 4H_2O$ and 13.63 g $Ni(NO_3)_2\cdot 6H_2O$ in 68 ml distilled water and adding dropwise 7.44 g 85% $H_3PO_4$ thereto while stirring. A small amount of water was added to the impregnation mixture and the result was allowed to stand for 1 hour. The result was dried in air at 121°C (250°F) overnight, and then impregnated with 22.09 g $(NH_4)_2Mo_7O_{24}\cdot 4H_2O$, 13.63 g $Ni(NO_3)_2\cdot 6H_2O$, and 7.44 g 85% $H_3PO_4$ in 68 ml distilled water. The result was allowed to stand for 2 hours, dried in air at 121°C (250°F) and calcined at 538°C (1000°F).

The resulting catalyst contained 17.70 wt.% $MoO_3$, 3.44 wt.% NiO and 4.35 wt.% oxygenated phosphorus component, calculated as $P_2O_5$, and had a surface area of 242 $m^2/g$ and pore volume of 0.4802 cc/g.

Example 6

The catalysts prepared in Examples 1 and 2 were tested for denitrogenation and hydrocracking activity in an automated processing unit that included a vertical, tubular, downflow reactor having a length of 81.3 cm (32") and inner diameter of 6.35 mm (1/4"). The unit included automatic controls to regulate hydrogen pressure and flow, temperature and feed rate. Catalyst was ground to 14—20 mesh and loaded into a 25.4—30.5 cm (10—12") segment of the reactor and sulfidied therein by passing, 8 vol.% $H_2S$ in hydrogen over the catalyst at 2.07MPa (300 psi) for 1 hour and at 149°C (300°F) followed by 1 hour at 205°C (400°F) and then 1 hour at 370°C (700°F). The reactor then was heated to operating temperature, pressured with hydrogen and a high nitrogen feed generated in situ from oil shale was pumped into the reactor using a Ruska pump. The feed had the following properties:

| | |
|---|---|
| API Gravity (°) | 23.8 |
| Nitrogen (wt.%) | 1.27 |
| Sulfur (wt.%) | 0.65 |
| Oxygen (wt.%) | 1.40 |
| Pour point (°C) | 15.5°C (60°F) |
| Simulated distillation (%) | |
| IBP—182°C (360°F) | 2.0 |
| 182—343°C (360—650°F) | 42.5 |
| 343°C+(650°F+) | 55.5 |

Operating conditions and results for each run are shown in Table 1. In addition to runs with the catalysts from Examples 1 and 2, comparative runs were conducted using comparative catalysts A—C which were prepared according to the general procedure of Examples 1 and 2 but without the use of phosphoric acid in the case of A and B and without a zeolite component in the case of C. Compositions of catalysts A—C were as follows:

A) 10.0 wt.% $Cr_2O_3$, 15.0 wt.% $MoO_3$ and 1.5 wt.% CoO supported on a dispersion of 30 wt.% ultrastable Y-type crystalline aluminosilicate zeolite (Davison) in 70 wt.% alumina;

B) 10.0 wt.% $Cr_2O_3$, 15.0 wt.% $MoO_3$ and 1.5 wt.% CoO supported on a dispersion of 50 wt.% ultrastable Y-type crystalline aluminosilicate zeolite dispersed in 50 wt.% alumina;

C) 5.0 wt.% $Cr_2O_3$, 15.0 wt.% $MoO_3$, 1.5 wt.% CoO and 4.6 wt.% oxygenated phosphorus component, calculated as $P_2O_5$, supported on alumina.

TABLE 1

| Catalyst | 1 | A | 2 | B | C |
|---|---|---|---|---|---|
| Temp (°C) | 405 | 405 | 416 | 416 | 405 |
| Temp (°F) | (760) | (760) | (780) | (780) | (760) |
| Pressure (MPa) | 12 | 12 | 12 | 12 | 12 |
| Pressure (psi) | 1800 | 1800 | 1800 | 1800 | 1800 |
| LHSV ($hour^{-1}$) | 0.5 | 0.5 | 0.5 | 0.5 | 0.5 |
| Days on oil | 6 | 9 | 7 | 6 | 6 |
| Liquid product (g) | 184 | 239 | 124 | 190 | 198 |
| API gravity (°) | 40.0 | 36.5 | 49.4 | 49.6 | 37.0 |
| Pour point (°C) | 21 | 27 | −40 | −26 | 24 |
| Pour point (°F) | (70) | (80) | −40 | (−15) | (75) |
| Sulfur (ppm) | 2 | 110 | 6 | 262 | 57 |
| Nitrogen (ppm) | 1.7 | 173 | 0.7 | 3 | 85 |
| Simulated distillation (%) IBP—177°C (IBP—350°F) | 14.5 | 10.7 | 44.5 | 42.0 | 9.0 |
| 177—343°C (350—650°F) | 60.0 | 54.3 | 53.0 | 52.6 | 55.0 |
| 343°C (650°F+) | 25.5 | 35.0 | 2.5 | 5.4 | 36.0 |

As can be seen from the table, catalysts 1 and 2 according to the invention exhibited superior denitrogenation and desulfurization activity as compared to all three comparative catalysts. Further, cracking activites of catalysts 1 and 2 were superior to those of comparative catalysts A and B, respectively, as evidenced by the simulated distillation data showing reduced 343°C+(650°F+) content. Cracking activites of 1 and 2 also were superior to that of catalyst C which lacked a zeolite component.

Example 7

The catalysts prepared in Examples 3 and 4 were tested for hydrocracking activity in a vertical tubular, downflow reactor having a length of 49.5 cm (19-1/2") and inner diameter of 1.39 cm (0.55") and equipped with a pressure gauge and DP cell to control hydrogen flow and a high pressure separator for removal of products. The reactor was loaded with 18.75 g catalyst, immersed in a molten salt-containing heating jacket at 260°C (500°F) and pressured to 8.6 MPa (1250 psi) with hydrogen. Temperature was held at 260°C (500°F) for two hours and then feed was pumped to the reactor with a Milton Roy pump. Temperature was slowly increased to 360°C (680°F), held there overnight and then raised to operating temperature of 377—388°C (710—730°F). Feed rate (LHSV) was 1—2 $hr^{-1}$. Runs were conducted for two weeks with periodic sampling.

The feed used in all runs was a mixture of 70 wt.% light catalytic cycle oil and 30 wt.% light virgin gas oil having the following properties:

| | |
|---|---|
| API Gravity (°) | 25.3 |
| Nitrogen (ppm) | 304 |
| Sulfur (wt.%) | 1.31 |
| Initial boiling point (°C) | 207 (404°F) |
| Final boiling point (°C) | 356 (673°F) |

In addition to the runs conducted using the catalysts of Examples 3 and 4, comparative runs were conducted using comparative catalysts A—C which are described below:

A) 2.5 wt.% CoO and 10.2 wt.% $MoO_3$ supported on a dispersion of 35 wt.% ultrastable Y-type crystalline aluminosilicate zeolite in 65 wt.% alumina prepared substantially according to the procedure of Example 3;

B) commercial hydrocracking catalyst containing 2.63 wt.% CoO and 10.5 wt.% $MoO_3$ supported on the base used in Example 3 obtained from the Davison Chemical Division of W. R. Grace and Co.;

C) 2.6 wt.% CoO and 10.0 wt.% $MoO_3$ supported on a dispersion of 35 wt.% ultrastable Y-type crystalline aluminosilicate zeolite (Davison) in 65 wt.% alumina and prepared substantially according to the procedure of Example 4.

Hydrocracking activites of the catalysts were determined on the basis of temperature required to convert 77 wt.% of the feed to gasoline boiling range products (up to 193°C (380°F). Activities relative to comparative catalysts C are reported in Table 2.

TABLE 2

| Catalyst | Relative activity | Increase (%) |
|---|---|---|
| A | 102 | 2 |
| B | 126 | 26 |
| 3 | 144 | 44 |
| C | 100 | — |
| 4 | 138 | 38 |

As can be seen from the table, the phosphorus-promoted, zeolite-containing catalysts of the invention exhibited significantly improved hydrocracking activity as compared to the comparative catalysts.

Example 8

Activity of the catalyst of Example 5 for mild hydrocracking was tested in an automated pilot plant consisting of a downflow, vertical pipe reactor of 76.2 cm (30") length and 9.53 mm (3/8") inner diameter equipped with four independently wired and controlled heaters, a pressure step down and metering device for introduction of hydrogen and an outlet pressure control loop to control withdrawal of hydrogen. The catalyst of Example 5 was calcined in air at 538°C (1000°F) for 2 hours and then screened to 14—20 mesh. The reactor was loaded to a height of 30.48 cm (twelve inches) with glass balls after which 25 cm (ten inches) were loaded with 16 $cm^3$ of catalyst. Glass balls were added to fill the reactor.

The reactor was heated to 149°C (300°F) and a gaseous mixture of 8 vol% $H_2S$ in hydrogen was passed over the catalyst at 1.4 MPa (200 psi) and 6.29 cc/sec (0.8 $ft^3$/hr). After an hour, temperature was raised to 205°C (400°F), and after another hour, to 371°C (700°F). After one hour at 371°C (700°F), flow of the gaseous mixture was discontinued and a hydrogen flow of 2136 $m^3/m^3$ (12,000 SCFB) at 8.3 MPa (1200 psi) was begun. Heavy vacuum gas oil was pumped to the reactor at $2.8\times10^{-3}$ cc/sec (10.2 cc/hr) using a positive displacement pump. After passage through the reactor, product excited the reactor through a high pressure gas-liquid separator via a valve with a control loop designed to maintain a constant liquid level in the high pressure separator. Feed properties were as follows.

| | | |
|---|---|---|
| API gravity (°) | 18.6 | |
| Pour point (°C) | 43 | (110°F) |
| Viscosity (cst at 100°C) | 11.68 | |
| Carbon (wt.%) | 84.94 | |
| Hydrogen (wt.%) | 11.63 | |
| Nitrogen (wt.%) | 0.166 | |
| Sulfur (wt.%) | 2.98 | |
| Simulated distillation | (°C) | (°F) |
| IBP | 209 | (409) |
| 5% | 355 | 671 |
| 10% | 386 | 727 |
| 20% | 420 | 788 |
| 40% | 462 | 863 |
| 60% | 492 | 918 |
| 80% | 525 | 977 |
| 90% | 538+ | 1000+ |
| Paraffins (wt.%) | 19.7 | 19.7 |
| Naphthenes (wt.%) | 34.7 | 34.7 |
| Monoaromatics (wt.%) | 12.6 | 12.6 |
| Polyaromatics and heterocyclics (wt.%) | 33.0 | 33.0 |

In addition to the catalyst from Example 5, a comparative catalyst (A) containing 3.5 wt.% NiO, 10 wt.% $Cr_2O_3$ and 15 wt.% $MoO_3$ supported on a dispersion of 20 wt.% rare earth-exchanged ultrastable Y-type zeolite in 80 wt.% alumina was tested. Another run was conducted using a catalyst (B) containing 20 wt.% $MoO_3$, 3.5 wt.% NiO and 3.0 wt.% oxygenated phosphorus component, calculated as $P_2O_5$, supported on alumina.

Operating conditions and results are shown in Table 3.

TABLE 3

| Run No./Sample No. | 1/1 | 1/2 | 1/3 | 1/4 | 1/5 | 1/6 |
|---|---|---|---|---|---|---|
| Catalyst | 5 | 5 | 5 | 5 | 5 | 5 |
| Temp (°C) | 370 | 393 | 393 | 365 | 388 | 388 |
| Temp (°F) | (700°F) | (740°F) | (740°F) | (690°F) | (730°F) | (730°F) |
| Pressure (MPa) | 8.3 | 8.3 | 8.3 | 8.3 | 8.3 | 8.3 |
| Pressure (psi) | (1200 psi) | (1200 psi) | (1200 psi) | (1200 psi) | (1200 psi) | (800 psi) |
| LHSV ($hour^{-1}$) | 0.625 | 0.625 | 0.625 | 0.625 | 0.625 | 0.625 |
| Hydrogen ($m^3/m^3$) | 2136 | 2136 | 2136 | 2136 | 2136 | 2136 |
| Hydrogen (SCFB) | (12000) | (12000) | (12000) | 12000 (SCFB) | 12000(SCFB) | 12000(SCFB) |
| Hours on oil | 136 | 352 | 496 | 808 | 976 | 1312 |
| API gravity (°) | 28.0 | 33.6 | 32.9 | 26.6 | 30.3 | 28.2 |
| Pour point (°C) | 27 | −57 | −51 | 35 | – | 13 |
| Pour point (°F) | (80) | (−70) | (−60) | (95°F) | (30°F) | (55°F) |
| Viscosity (cst at 100°C) | 4.71 | 2.51 | 2.55 | 6.07 | 3.88 | 3.89 |
| Carbon (wt.%) | 87.00 | 86.90 | 87.05 | 87.09 | 87.02 | 87.26 |
| Hydrogen (wt.%) | 12.93 | 13.09 | 12.94 | 12.80 | 12.96 | 12.66 |
| Sulfur (ppm) | 633 | 137 | 86 | 660 | 88 | 368 |
| Nitrogen (ppm) | 135 | 8.8 | 14 | 409 | 29 | 338 |

TABLE 3 (cont.)

| Run No./Sample No. | 1/1 | 1/2 | 1/3 | 1/4 | 1/5 | 1/6 |
|---|---|---|---|---|---|---|
| Simulated distillation (°C) | | | | | | |
| IBP | 46(114°F) | −18(0°F) | −26(−15°F) | 209(409°F) | ND* | ND |
| 5% | 165(329°F) | 74(165°F) | 76(168°F) | 307(584°F) | ND | ND |
| 20% | 333(631°F) | 219(427°F) | 231(448°F) | 380(716°F) | ND | ND |
| 50% | 425(797°F) | 369(696°F) | 375(707°F) | 443(830°F) | ND | ND |
| 80% | 436(907°F) | 460(860°F) | 462(863°F) | 498(928°F) | ND | ND |
| 95% | 532(990°F) | 519(967°F) | 516(961°F) | 537(999°F) | ND | ND |
| % Desulfurization | 97.9 | 99.5 | 99.7 | 97.7 | 99.7 | 98.7 |
| % Denitrogenation | 91.9 | 99.5 | 99.2 | 60.2 | 98.2 | 79.6 |
| Hydrogen consumed ($m^3/m^3$) | 142 | 186 | 167 | 125 | 166 | 113 |
| Hydrogen consumed (SCFB) | (795 SCFB) | (1045 SCFB) | (940 SCFB) | (700 SCFB) | (930 SCFB) | (635 SCFB) |
| Yield (wt.%) | | | | | | |
| IBP-182°C (IBP-360°F) | 5.5 | 14.8 | 13.6 | 0 | ND | ND |
| 182—343°C (360—650°F) | 17.9 | 25.7 | 24.7 | 10.4 | ND | ND |
| 343°C+ (650°F+) | 75.4 | 53.9 | 55.3 | 88.9 | ND | ND |

TABLE 3

| Run No./Sample No. | 2/1 | 2/2 | 2/3 | 3/1 | 3/2 |
|---|---|---|---|---|---|
| Catalyst | B | B | B | A | A |
| Temp (°C) | 393 | 416 | 416 | 393 | 416 |
| Temp (°F) | (740) | (780) | (780) | (740) | (780) |
| Pressure (MPa) | 8.3 | 8.3 | 8.3 | 8.3 | 8.3 |
| Pressure (psi) | (1200) | (1200) | (1200) | (1200) | (1200) |
| LHSV ($hour^{-1}$) | 0.68 | 0.68 | 0.68 | 0.625 | 0.625 |
| Hydrogen ($m^3/m^3$) | 2136 | 2136 | 2136 | 2136 | 2136 |
| Hydrogen (SCFB) | (12000) | (12000) | (12000) | (12000) | (12000) |
| Hours on oil | 128 | 320 | 488 | 110 | 158 |
| API gravity (°) | ND* | 32.5 | 33.2 | 29.7 | 30.3 |
| Pour point (°C) | 38 | 38 | 32 | 41 | 38 |
| Pour point (°F) | (100°F) | (100°F) | (90°F) | (105°F) | (100°F) |
| Viscosity (cst at 100°C) | ND | 2.10 | 2.30 | 3.84 | 2.98 |
| Carbon (wt.%) | 86.78 | 86.97 | 87.06 | 87.01 | 87.16 |
| Hydrogen (wt.%) | 13.19 | 13.02 | 12.93 | 12.97 | 12.82 |
| Sulfur (ppm) | 240 | 70 | 16 | 102 | 79 |
| Nitrogen (ppm) | 22 | 3 | 1 | 76 | 137 |

TABLE 3 (cont.)

| Run No./Sample No. | 2/1 | 2/2 | 2/3 | 3/1 | 3/2 |
|---|---|---|---|---|---|
| Simulated distillation (°C) | | | | | |
| IBP | 86(187°F) | 36(97°F) | 64(147°F) | −13 (9°F) | 66(151°F) |
| 5% | 173(343°F) | 118(244°F) | 131(267°F) | 184(364°F) | 161(322°F) |
| 20% | 300(572°F) | 227(440°F) | 239(462°F) | 319(606°F) | 292(558°F) |
| 50% | 409(769°F) | 347(656°F) | 359(678°F) | 419(786°F) | 400(753°F) |
| 80% | 465(869°F) | 442(827°F) | 450(841°F) | 485(905°F) | 472(882°F) |
| 95% | 529(985°F) | 499(931°F) | 505(941°F) | 532(990°F) | 520(969°F) |
| % Desulfurization | 99.2 | 99.8 | 99.9 | 99.7 | 99.1 |
| % Denitrogenation | 98.7 | 99.8 | 99.9 | 95.3 | 91.6 |
| Hydrogen consumed (SCFB) | (990) | (940) | (870) | (825) | (890) |
| Hydrogen consumed ($m^3/m^3$) | 176 | 167 | 155 | 147 | 158 |
| Yield (wt.%) | | | | | |
| IBP-182°C (IBP-360°F) | 5.6 | 12.0 | 11.4 | 4.8 | 6.0 |
| 182—343°C (360—650°F) | 22.9 | 37.2 | 34.3 | 20.1 | 23.3 |
| 343°C+(650°F+) | 70.1 | 48.0 | 51.6 | 74.0 | 64.9 |

*ND stands for not determined.
*ND stands for not determined.
*ND stands for not determined.

As can be seen from the table, all three catalysts exhibited high desulfurization activity and catalysts 5 and B showed good denitrogenation. Cracking activity, as indicated by the yield data, was generally comparable for catalysts 5 and B, both of which were superior to catalysts A. Catalyst 5 was superior to both comparative catalysts in terms of selective cracking of waxy components as evidenced by the reductions in pour point in runs using catalyst 5. Catalyst 5 also was superior in terms of overall performance in that comparable or better results were achieved with that catalyst at lower temperatures than those used in the comparative runs.

Example 9

A series of catalyst compositions was prepared from various crystalline molecular sieve zeolite and matrix components and aqueous phosphoric acid solutions of various metal salts (pH about 3) according to the general procedure of Examples 1—5. A second series of catalysts was prepared in similar fashion to contain identical levels of metals and support components but no phosphorus (pH about 5).

Samples of the catalysts were analyzed by X-ray diffraction to determine the effect of phosphoric acid on retention of zeolite crystallinity. For each pair of catalysts (with and without phosphoric and impregnation) of identical metals and support content, intensity of one or more X-ray bands characteristic of the zeolite component and not subject to interference by the melts of the catalysts were measured.

For each pair of catalysts, composition and crystallinity of the phosphorus component-containing catalyst relative to that of the phosphorus-free composition is reported in Table 4.

TABLE 4

| Sample | Composition (wt.%) | Relative crystallinity (%) |
|---|---|---|
| A | 3.5% NiO, 18% $MoO_3$, 3.4% $P_2O_5$/ 50 USY[(1)], 50% $Al_2O_3$ | 86 |
| B | 3.5% NiO, 18% $MoO_3$, 3.4% $P_2O_5$/ 50% Y[(2)], 50% $Al_2O_3$ | 78 |
| C | 3.5% NiO, 18% $MoO_3$, 3.4% $P_2O_5$/ 50% ZSM-5[(3)], 50% $Al_2O_3$ | 86 |
| D | 1.5% CoO, 10% $Cr_2O_3$, 15% $MoO_3$ 4.6% $P_2O_5$/40% HAMS-1B[(4)], 60% $Al_2O_3$ | 79 |
| E | 1.5% CoO, 10% $Cr_2O_3$, 15% $MoO_3$, 4.6% $P_2O_5$/30% USY, 70% $Al_2O_3$ | 88 |

[(1)] Ultrastable Y-type crystalline aluminosilicate zeolite.
[(2)] Y-type crystalline aluminosilicate zeolite.
[(3)] Crystalline aluminosilicate zeolite ZSM-5.
[(4)] Crystalline borosilicate zeolite HAMS-1B.

As can be seen, crystallinity of the compositions according to the invention was quite high relative to compositions identical but for inclusion of phosphoric acid in preparation. 3.5% NiO, 18.0% $MoO_3$, 3.5% $P_2O_5$/30% USY, 70% $Al_2O_3$ exhibited 66% crystallinity relative to a dispersion of 30% USY in 70% $Al_2O_3$.

**Claims**

1. A process for hydrocracking gas oil boiling range hydrocarbon feeds comprising contacting the feed with hydrogen under hydrocracking conditions in the presence of a catalyst comprising an active metallic component comprising at least one metal having hydrogenation activity and at least one oxygenated phosphorus component, and a support component comprising at least one non-zeolitic, porous refractory inorganic oxide matrix component selected from the group consisting of alumina, silica, zirconia, titania, magnesia and combinations thereof and at least one crystalline molecular sieve zeolite component, wherein the gas oil boiling range feed boils at 204 to 538°C (400° to 1000°F) and contains up to 0.1 wt% nitrogen and up to 2 wt% sulfur, and wherein the hydrocracking conditions comprise a temperature of from 343 to 455°C (650°F to 850°F) and a total pressure of from 6.89 to 20.7 MPa (1000 psi to 3000 psi).

2. The process of claim 1 wherein the crystalline molecular sieve zeolite component comprises an ultrastable Y-type crystalline aluminosilicate zeolite.

3. The process of claim 1 wherein hydrocracking conditions comprise a temperature of 343 to 455°C (650°F to 850°F), total pressure of 6.89 to 20.7 MPa (1000 to 3000 psi), hydrogen partial pressure of 2.07 to 17.2 MPa (300 to 2500 psi), LHSV of 0.2 to 10 $hour^{-1}$ and hydrogen recycle rate of 890 to 3560 $m^3/m^3$, (5,000 to 20,000 SCFB).

4. The process of claim 1 wherein the hydrogenation metal of the active metallic component comprises at least one metal of Group VIB or VIII.

5. The process of claim 1 wherein the active metallic component is deposed on a dispersion of ultrastable Y-type aluminasilicate zeolite in alumina or silica-alumina.

6. The process of any of claims 1, 2, 3, 4 or 5 wherein the gas oil boiling range feed comprises a catalytic cycle oil, a virgin gas oil boiling range hydrocarbon or a combination thereof.

7. A process for denitrogenation of high nitrogen content hydrocarbon feeds comprising contacting the feed with hydrogen under denitrogenation conditions in the presence of a catalyst comprising an active metallic component comprising at least one metal having hydrogenation activity and at least one oxygenated phosphorus component, and a support component comprising at least one non-zeolitic, porous refractory inorganic oxide matrix component selected from the group consisting of alumina, silica, zirconia, titania, magnesia and combinations thereof and at least one crystalline molecular sieve zeolite component, wherein the high nitrogen content feed is a whole petroleum or synthetic crude oil, coal, shale or biomass liquid, or a fraction thereof containing at least 0.4 wt% nitrogen.

8. The process of claim 7 wherein denitrogenation conditions are denitrogenation hydrotreating conditions and comprise a temperature of 343 to 405°C (650° to 760°F), hydrogen pressure of 6.89 to 17.2 MPa (1000 to 2500 psi), LHSV of 0.2 to 4 and hydrogen addition rate of 356 to 3560 $m^3/m^3$ (2000 to 20,000 SCFB).

9. The process of claim 7 wherein denitrogenation conditions are denitrogenation hydrocracking conditions and comprise a temperature of 382 to 438°C (720° to 820°F), hydrogen pressure of 6.89 to 17.2 MPa (1000 to 2500 psi), LHSV of 0.2 to 3 and hydrogen addition rate of 712 to 3560 $m^3/m^3$ (4000 to 20,000 SCFB).

10. The process of claim 7 wherein the hydrogenation metal of the active metallic component comprises at least one metal of Group VIB or VIII.

11. The process of claim 10 wherein the crystalline molecular sieve zeolite component comprises an ultrastable Y-type crystalline aluminosilicate zeolite, a crystalline borosilicate zeolite of the AMS-type or a crystalline aluminosilicate zeolite of the ZSM-type.

12. The process of claim 11 wherein the hydrogenating metal of the active metallic component comprises nickel-molybdenum, chromium-molybdenum-cobalt or chromium-molybdenum-nickel.

13. The process of claim 12 wherein the support component comprises a dispersion of ultrastable Y-type crystalline aluminosilicate zeolite in alumina or silica-alumina.

14. The process of any of claims 7—13 wherein the high nitrogen content feed comprises a whole shale oil or a shale oil fraction.

15. A catalytic composition comprising (1) an active metallic component comprising at least one metal having hydrocarbon conversion activity and at least one oxygenated phosphorus component; and (2) a support component comprising at least one non-zeolitic, porous refractory inorganic oxide matrix component and at least one shape selective crystalline molecular sieve zeolite component.

16. The composition of claim 15 wherein the shape selective crystalline molecular sieve zeolite component comprises a crystalline borosilicate zeolite.

17. The composition of claim 15 wherein the metal having hydrocarbon conversion activity comprises at least one Group IB, II, IIIB—VIIB or VIII metal.

18. The composition of claim 17 wherein the active metallic component comprises at least one metal having hydrogenation activity.

19. The composition of claim 15 wherein the oxygenated phosphorus component is present in an amount ranging from 0.1 to 20 wt%, expressed as $P_2O_5$ and based on total weight of the composition.

20. The composition of claim 17 wherein the metal having hydrocarbon conversion activity comprises at least one hydrogenation metal selected from the group consisting of chromium, molybdenum, tungsten, iron, cobalt and nickel.

21. The composition of claim 15, wherein (1) the active metallic component comprises 5 to 35 wt% of at least one hydrogenating metal and 0.5 to 15 wt.% of at least one oxygenated phosphorus component, expressed as $P_2O_5$, and (2) the support component comprises alumina, silica or a combination of alumina and silica and at least one crystalline molecular sieve zeolite component comprising a crystalline borosilicate zeolite.

22. A process for mild hydrocracking hydrocarbon feeds comprising contacting the feed with hydrogen under mild hydrocracking conditions in the presence of the catalytic composition of any of claims 15 to 21.

23. The process of claim 22, wherein the support component comprising at least one non-zeolitic, porous refractory inorganic oxide matrix component is selected from the group consisting of alumina, silica, zirconia, titania, magnesia and combinations thereof.

24. The process of claim 22 wherein the hydrocarbon feed is a petroleum or synthetic crude oil distillate having a pour point of 10 to 66°C (50° to 150°F) and containing up to 5 wt% sulphur, 0.5 wt% nitrogen and 0.5 wt% oxygen.

25. The process of claim 22 wherein mild hydrocracking conditions include a temperature of 343 to 427°C (650° to 800°F), hydrogen pressure of 3.45 to 17.2 MPa (500 to 2500 psi), LHSV of 0.2 to 5 reciprocal hours and hydrogen addition rate of 178 to 3560 $m^3/m^3$ (1000 to 20,000 SCFB).

26. The process of claim 25 wherein the hydrogenating metal of the active metallic component comprises a metal of Group VIB or VIII.

27. The process of claim 26 wherein the shape selective crystalline molecular sieve zeolite component comprises a crystalline borosilicate zeolite of the AMS-type or a crystalline aluminosilicate zeolite of the ZSM-type.

28. The process of claim 26 wherein the hydrogenating metal comprises nickel and molybdenum.

29. A process for mild hydrocracking hydrocarbon feeds comprising contacting the feed with hydrogen under mild hydrocracking conditions in the presence of the catalytic composition of claim 15, wherein the shape selective crystalline molecular sieve zeolite component comprises crystalline borosilicate zeolite HAMS-1B.

30. The process of any of claims 26 to 29 wherein mild hydrocracking conditions are dewaxing mild hydrocracking conditions and comprise a temperature of 343 to 427°C (650° to 800°F), hydrogen pressure of 5.51 to 17.2 MPa (800 to 2500 psi), LHSV of 0.2 to 5 reciprocal hours and hydrogen addition rate of 178 to 3560 $m^3/m^3$ (1000 to 20,000 SCFB).

31. The process of any of claims 26 to 29 wherein mild hydrocracking conditions are catalytic cracking feed mild hydrocracking conditions and comprise a temperature of 343 to 405°C (650° to 760°F), hydrogen pressure of 3.45 to 13.8 MPa (500 to 2000 psi), LHSV of 0.2 to 4 reciprocal hours and hydrogen addition rate of 178 to 3560 $m^3/m^3$ (1000 to 20,000 SCFB).

32. A process for producing lube oil base stock of high viscosity index, low pour point and good stability comprising contacting a hydrocarbon feed with hydrogen at 371 to 427°C (700° to 800°F), 8.27 to 13.8 MPa (1200 to 2000 psi) hydrogen 0.2 to 2 reciprocal LHSV and 356 to 1780 $m^3/m^3$ (2000 to 10,000 SCFB) hydrogen in the presence of the catalytic composition of claim 15, comprising the active metallic component comprising 1 to 7 wt% NiO, and 10 to 20 wt% $MoO_3$ and 0.1 to 5 wt% of the oxygenated phosphorus component, expressed as $P_2O_5$, and the support component comprising a dispersion of 15 to 35 wt% shape selective crystalline borosilicate zeolite of the AMS-type in 65 to 85 wt% non-zeolitic porous refractory inorganic oxide matrix component comprising alumina.

33. The process of claim 32 wherein the hydrocarbon feed is a petroleum or synthetic crude oil distillate having a pour point of 10 to 66°C (50° to 150°F) and containing up to 5 wt% sulfur, 0.5 wt% nitrogen and/or 0.5 wt% oxygen.

34. A method for preparing the catalytic composition of claim 15, comprising impregnating a support component comprising at least one non-zeolitic, refractory inorganic oxide matrix component and at least one acid-tolerant crystalline molecular sieve zeolite component comprising a crystalline borosilicate zeolite, with precursors of an active metallic component comprising at least one metal having hydrocarbon conversion activity and at least one oxygenated phosphorus component under conditions effective to retain substantial zeolite crystallinity, and calcining the resulting impregnation product.

35. The method of claim 34, wherein the precursors to the active metallic component comprise phosphoric acid or a salt thereof having a pH of at least 2, and the support component is impregnated with such phosphoric acid or salt simultaneously with, or subsequently to, impregnation with at least one metal precursor.

**Patentansprüche**

1. Verfahren zum Hydrocracken von Kohlenwasserstoffbeschickungen mit einem Gasölsiedebereich umfassend das Inkontaktbringen der Beschickung mit Wasserstoff unter Hydrocrackbedingungen in Anwesenheit eines Katalysators, umfassend eine aktive Metallkomponente, umfassend zumindest ein Metall mit Hydrierungsaktivität und zumindest eine sauerstoffhaltige Phosphorkomponente und eine Trägerkomponente, umfassend zumindest eine nicht-zeolithische poröse feuerfeste anorganische Oxidmatrixkomponente, ausgewählt unter Aluminiumoxid, Siliciumdioxid, Zirkoniumoxid, Titanoxid, Magnesiumoxid und deren Kombinationen, und zumindest eine kristalline Molekularsiebzeolithkomponente bei dem die Beschickung mit dem Gasölsiedebereich bei 204 bis 538°C (400 bis 1000°F) siedet und bis zu 0,1 Gew.-% Stickstoff und bis zu 2 Gew.-% Schwefel enthält und bei dem die Hydrocrackbedingungen eine Temperatur von 343 bis 455°C (650°F bis 850°F) und einen Gesamtdruck von 6,89 bis 20,7 MPa (1000 psi bis 3000 psi) umfassen.

2. Verfahren nach Anspruch 1, bei dem die kristalline Molekularsiebzeolithkomponente ein ultrastabiles kristallines Aluminosilikatzeolith vom Y-Typ umfaßt.

3. Verfahren nach Anspruch 1, bei dem die Hydrocrackbedingungen ein Temperatur von 343 bis 455°C (650°F bis 850°F), einen Gesamtdruck von 6,89 bis 20,7 MPa (1000 bis 3000 psi), einen Wasserstoffpartialdruck von 2,07 bis 17,2 MPa (300 bis 2500 psi), eine stündliche Flüssigkeitsraumgeschwindigkeit bzw. LHSV von 0,2 bis 10 $h^{-1}$ und eine Wasserstoffrückführrate von 890 bis 3560 $m^3/m^3$ (5000 bis 20000 SCFB) umfassen.

4. Verfahren nach Anspruch 1, bei dem das Hydrierungsmetall der aktiven metallischen Komponente zumindest ein Metall der Gruppe VIB oder VIII umfaßt.

5. Verfahren nach Anspruch 1, bei dem die aktive Metallkomponente auf einer Dispersion von ultrastabilem Aluminosilikatzeolith vom Y-Typ in Aluminiumoxid oder Siliciumdioxid-aluminiumoxid abgeschieden ist.

6. Verfahren gemäß einem der Ansprüche 1, 2, 3, 4, oder 5, bei dem die Beschickung mit dem Gasölsiedebereich ein katalytisches Kreislauföl, einen Kohlenwasserstoff mit dem Siedebereich eines ursprünglichen Gasöls oder eine Kombination hiervon umfaßt.

7. Verfahren zur Denitrogenierung von Kohlenwasserstoffbeschickungen mit hohem Stickstoffgehalt, umfassend das Inkontaktbringen der Beschickung mit Wasserstoff unter Denitrogenierungsbedingungen in Anwesenheit eines Katalysators, umfassend eine aktive Metallkomponente, umfassend zumindest ein Metall mit Hydrierungsaktivität und zumindest eine sauerstoffhaltige Phosphorkomponente und eine Trägerkoponente, umfassend zumindest eine nicht-zeolithische poröse feuerfesteanorganische Oxidmatrixkomponente, ausgewählt unter Aluminiumoxid, Siliciumdiooxid, Zirkonoxid, Titanoxid, Magnesiumoxid und Kombinationen hiervon, und zumindest eine kristalline Molekularsiebzeolithkomponente, worin die Beschickung mit hohem Stickstoffgehalt eine vollständiges Erdöl oder synthetisches Rohöl, Kohle, Schiefer oder Biomasseflüssigkeit oder eine zumindest 0,4 Gew.-% Stickstoff enthaltende Fraktion hiervon ist.

8. Verfahren nach Anspruch 7, worin die Denitrogenierungsbedingungen Denitrogenierungs-Hydrobehandlungsbedingungen sind und eine Temperatur von 343 bis 405°C (650° bis 760°F), einen Wasserstoffdruck von 6,89 bis 17,2 MPa (1000 bis 2500 psi), eine LHSV von 0,2 bis 4 und eine Wasserstoffzugaberate von 356 bis 3560 $m^3/m^3$ (2000 bis 20000 SCFB) umfassen.

9. Verfahren nach Anspruch 7, worin die Denitrogenierungsbedingungen Denitrogenierungs-Hydrocrackbedingungen sind und eine Temperatur von 382 bis 438°C (720° bis 820°F), einen Wasserstoffdruck von 6,89 bis 17,2 MPa (1000 bis 2500 psi), eine LHSV von 0,2 bis 3 und eine Wasserstoffzugaberate von 712 bis 3560 $m^3/m^3$ (4000 bis 20000 SCFB) umfassen.

10. Verfahren nach Anspruch 7, worin das Hydrierungsmetall der aktiven metallischen Komponente zumindest ein Metall der Gruppe VIB oder VIII umfaßt.

11. Verfahren nach Anspruch 10, worin die kristalline Molekularsiebzeolithkomponente ein ultrastabiles kristallines Aluminosilikatzeolith vom Y-Typ, ein kristallines Borosilikatzeolith vom AMS-Typ oder ein kristallines Aluminosilikatzeolith von ZSM-Typ umfaßt.

12. Verfahren nach Anspruch 11, worin das Hydrierungsmetall der aktiven metallischen Komponente Nickel-Molybdän, Chrom-Molybdän-Cobalt oder Chrom-Molybdän-Nickel umfaßt.

13. Verfahren nach Anspruch 12, worin der Träger eine Dispersion von ultrastabilem kirstallinen Aluminosilikatzeolith vom Y-Typ in Aluminiumoxid oder Siliciumdioxid-Aluminiumoxid umfaßt.

14. Verfahren nach einem der Ansprüche 7 bis 13, worin die Beschickung mit hohem Stickstoffgehalt ein vollständiges Schieferöl oder eine Schieferölfraktion umfaßt.

15. Katalytische Zusammensetzung, umfassend (1) eine aktive metallische Komponente, umfassend zumindest ein Metall mit Kohlenwasserstoffumwandlungsaktivität und zumindest eine sauerstoffhaltige Phosphorkomponente und (2) eine Trägerkomponente, umfassend zumindest eine nichtzeolithische poröse feuerfeste anorganische Oxidmatrixkomponente und zumindest eine formselektive kristalline Molekularsiebzeolithkomponente.

16. Zusammensetzung gemäß Anspruch 15, worin die formselektive kristalline Molekarsiebzeolithkomponente ein kristallines Borsilikatzeolith umfaßt.

17. Zusammensetzung gemäß Anspruch 15, worin das Metall mit Kohlenwasserstoffumwandlungsaktivität zumindest ein Metall der Gruppe IB, II, IIIB—VIIB oder VIII umfaßt.

18. Zusammensetzung gemäß Anspruch 17, worin die aktive Metallkomponente zumindest ein Metall mit Hydrierungsaktivität umfaßt.

19. Zusammensetzung gemäß Anspruch 15, worin die sauerstoffhaltige Phosphorkomponente in einer Menge von 0,1 bis 20 Gew.-%, ausgedrückt als $P_2O_5$ und bezogen auf das Gesamtgewicht der Zusammensetzung vorhanden ist.

20. Zusammensetzung gemäß Anspruch 17, worin das Metall mit Kohlenwasserstoffumwandlungsaktivität zumindest ein Hydrierungsmetall, ausgewählt unter Chrom, Molybdän, Wolfram, Eisen, Cobalt und Nickel, umfaßt.

21. Zusammensetzung gemäß Anspruch 15, worin (1) die aktive metallische Komponente 5 bis 35 Gew.-% zumindest eines Hydrierungsmetalls und 0,5 bis 15 Gew.-% zumindest einer sauerstoffhaltigen Phosphorkomponente, ausgedrückt als $P_2O_5$, und (2) die Trägerkomponente Aluminiumoxid, Siliziumdioxid oder eine Kombination hiervon oder Aluminiumoxid und Siliciumdioxid und zumindest eine kristalline Molekularsiebzeolithkomponente, umfassend ein kristallines Borsilikatzeolith, umfaßt.

22. Verfahren zum milden Hydrocracken von Kohlenwasserstoffbeschickungen, umfassend das Inkontaktbringen der Beschickung mit Wasserstoff unter milden Hydrocrackbedingungen unter Anwesenheit der katalytischen Zusammensetzung gemäß einem der Anspruch 15 bis 21.

23. Verfahren gemäß Anspruch 22, worin die Trägerkomponente, die zumindest eine nicht-zeolithische poröse feuerfeste anorganische Oxidmatrixkomponente umfaßt, unter Aluminiumoxid, Siliciumdioxid, Zirkonoxid, Titanoxid, Magnesiumoxid und Kombinationen hiervon ausgewählt ist.

24. Verfahren gemäß Anspruch 22, worin die Kohlenwasserstoffbeschickung Erdöl oder synthetisches Rohöldestillat mit einem Fließ- bzw. Stockpunkt von 10 bis 66°C (50° bis 150°F) und mit einem Gehalt von bis zu 5 Gew.-% Schwefel, 0,5 Gew.-% Stickstoff und 0,5 Gew.-% Sauerstoff ist.

25. Verfahren gemäß Anspruch 22, worin die milden Hydrocrackbedingungen eine Temperatur von 343 bis 427°C (650° bis 800°F), einen Wasserstoffdruck von 3,45 bis 17,2 mPa (500 bis 2500 psi), eine LHSV

von 0,2 bis 5 reziproken Stunden und eine Wasserstoffzugaberate von 178 bis 3560 $m^3/m^3$ (1000 bis 20000 SCFB) umfassen.

26. Verfahren gemäß Anspruch 25, worin das Hydrierungsmetall der aktiven metallischen Komponente ein Metall der Gruppe VIB oder VIII umfaßt.

27. Verfahren gemäß Anspruch 26, worin die formselektive kristalline Molekularsiebzeolithkomponente ein kristallines Borsilikatzeolith von AMS-Typ oder ein kristallines Aluminosilikatzeolith vom ZSM-Typ umfaßt.

28. Verfahren gemäß Anspruch 26, worin das Hydrierungsmetall Nickel und Molybdän umfaßt.

29. Verfahren zum milden Hydrocracken von Kohlenwasserstoffbeschickungen, umfassend das Inkontaktbringen der Beschickung mit Wasserstoff unter milden Hydrocrackbedingungen in Anwesenheit der katalytischen Zusammensetzung gemäß Anspruch 15, worin die formselektive kristalline Molekularsiebzeolithkomponente kristallines Borsilikatzeolith HAMS-1B umfaßt.

30. Verfahren gemäß einem der Ansprüche 26 bis 29, worin die milden Hydrocrackbedingungen entwachsende milde Hydrocrackbedingungen sind und eine Temperatur von 343 bis 427°C (650°C bis 800°F), einen Wasserstoffdruck von 5,51 bis 17,2 MPa (800 bis 2500 psi), eine LHSV von 0,2 bis 5 reziproke Stunden und eine Wasserstoffzugaberate von 178 bis 3560 $m^3/m^3$ (1000 bis 20000 SCFB) umfassen.

31. Verfahren gemäß einem der Ansprüche 26 bis 29, worin die milden Hydrocrackbedingungen milde Hydrocrackbedingungen eines katalytischen Crackens sind und eine Temperatur von 343 bis 405°C (650° bis 760°F), einen Wasserstoffdruck von 3,45 bis 13,8 MPa (500 bis 2000 psi), eine LHSV von 0,2 bis 4 reziproke Stunden und eine Wasserstoffzugaberate von 178 bis 3560 $m^3/m^3$ (1000 bis 20000 SCFB) umfassen.

32. Verfahren zur Herstellung von Schmierölbasischargen mit hohem Viskositätsindex, niedrigem Fließ- bzw. Stockpunkt und guter Stabilität, umfassend das Inkontaktbringen einer Kohlenwasserstoffbeschickung mit Wasserstoff bei 371 bis 427°C (700° bis 800°F), 8,27 bis 13,8 MPa (1200 bis 2000 psi) Wasserstoff, 0,2 bis 2 reziproke Stunden LHSV und 356 bis 1780 $m^3/m^3$ (2000 bis 10000 SCFB) Wasserstoff in Gegenwart der katalytischen Zusammensetzung von Anspruch 15, umfassend die aktive metallische Komponente, umfassend 1 bis 7 Gew.-% NiO und 10 bis 20 Gew.-% $MoO_3$ und 0,1 bis 5 Gew.-% sauerstoffhaltige Phosphorkomponente, ausgedrückt als $P_2O_5$, und die Trägerkomponente, umfassend eine Dispersion von 15 bis 35 Gew.-% formselektivem kristallinem Borsilikatzeolith vom ASM-Typ in 65 bis 85 Gew.-% nicht-zeolithischer poröser feuerfester anorganischer Oxidmatrixkomponente, umfassend Aluminiumoxid.

33. Verfahren gemäß Anspruch 32, worin die Kohlenwasserstoffbeschickung Erdöl oder synthetisches Rohöldestillat mit einem Fließ- bzw. Stockpunkt von 10 bis 66°C (50° bis 150°F) und mit einem Gehalt von bis zu 5 Gew.-% Schwefel, 0,5 Gew.-% Stickstoff und/oder 0,5 Gew.-% Sauerstoff ist.

34. Verfahren zur Herstellung der katalytischen Zusammensetzung gemäß Anspruch 15, umfassend das Imprägnieren einer Trägerkomponente, umfassend zumindest eine nichtzeolithische feuerfeste anorganische Oxidmatrixkomponente und zumindest eine säuertolerante kristalline Molekularsiebzeolithkomponente, umfassend ein kristallines Borsilikatzeolith, mit Vorläufern einer aktiven metallischen Komponente, umfassend zumindest ein Metall mit Kohlenwasserstoffumwandlungsaktivität und zumindest eine sauerstoffhaltige Phosphorkomponente unter Bedingungen, die im Hinblick auf die wesentliche Beibehaltung der Zeolithkristallinität effektiv sind, und das Calzinieren des entstandenen Imprägnierungsprodukts.

35. Verfahren gemäß Anspruch 34, worin die Vorläufer für die aktive metallische Komponente Phosphorsäure oder ein Salz hiervon mit einem pH von zumindest 2 umfassen, und die Trägerkomponente mit derartiger Phosphorsäure oder einem Salz gleichzeitig mit einer oder im Anschluß an eine Imprägnierung mit zumindest einem Metallvorläufer imprägniert wird.

**Revendications**

1. Procédé pour l'hydrocraquage de charges d'hydrocarbures du domaine d'ébullition du gazole, comportant l'étape de mise en contact de la charge avec de l'hydrogène dans des conditions d'hydrocraquage en présence d'un catalyseur comprenant un composant métallique actif comprenant au moins un métal ayant une activité d'hydrogénation et au moins un composant oxygéné du phosphore, et un composant support comprenant au moins un composant du type matrice d'oxyde minéral réfractaire poreuse non-zéolitique, choisi dans le groupe constitué par l'alumine, la silice, la zircone, le dioxyde de titane, la magnésie et leurs combinaisons et au moins un composant zéolite cristalline formant tamis moléculaire, dans lequel la charge du domaine d'ébullition de gazole entre en ébullition dans un domain de température de 204 à 538°C (400° à 1000°F) et contient jusqu'à 0,1 % en poids d'azote et jusqu'à 2% en poids de soufre, et dans lequel les conditions d'hydrocraquage comprennent une température de 343 à 455°C (650°F à 850°F) et une pression totale de 6,89 à 20,7 MPa (1000 psi à 3000 psi).

2. Procédé selon la revendication 1, dans lequel le composant zéolite cristalline, formant tamis moléculaire comprend une zéolite cristalline aluminosilicatée du type Y ultra stable.

3. Procédé selon la revendication 1, dans lequel les conditions d'hydrocraquage comprennent une température de 343 à 455°C (650°F à 850°F), une pression totale de 6,89 à 20,7 MPa (1000 à 3000 psi), une pression partielle d'hydrogène de 2,07 à 17,2 MPa (300 à 2500 Psi), une LHSV (vitesse spatiale horaire

linéaire) de 0,2 à 10 $heures^{-1}$ et un taux de recyclage d'hydrogène de 890 à 3560 $m^3/m^3$ (5000 à 20000 SCFB).

4. Procédé selon la revendication 1, dans lequel le métal d'hydrogénation du composant métallique actif comprend au moins un métal du groupe VIB ou VIII.

5. Procédé selon la revendication 1, dans lequel le composant métallique actif est déposé sur une dispersion de zéolite aluminosilicatée du type Y ultra stable dans l'alumine ou la silice-alumine.

6. Procédé selon l'une quelconque des revendications 1, 2, 3, 4 ou 5, dans lequel la charge du domaine d'ébullition du gazole comprend une huile de recyclage catalytique, un hydrocarbure du domaine d'ébullition du gazole vierge ou une combinaison de ceux-ci.

7. Procédé pour la dénitruration de charges d'hydrocarbures à teneur élevée en azote comprenant l'étape de mise en contact de la charge avec de l'hydrogène dans des conditions de dénitruration en présence d'un catalyseur comprenant un composant métallique actif comprenant au moins un métal ayant une activité d'hydrogénation et au moins un composant oxygéne de phosphore, et un composant support comprenant au moins un composant matrice d'oxyde minéral réfractaire poreuse, non-zéolitique, choisi dans le groupe comprenant l'alumine, la silice, la zircone, le dioxyde de titane, la magnésie et des combinaisons de ceux-ci et au moins un composant zéolite cristalline formant tamis moléculaire, dans lequel la charge à teneur éleveée en azote est un pétrole complet ou une huile synthétique brute, du charbon, du schiste ou une biomasse liquide ou une fraction de ceux-ci contenant au moins 0,4 % en poids d'azote.

8. Procédé selon la revendication 7, dans lequel les conditions de dénitruration sont des conditions d'hydrotraitement de dénitruration et comprennent une température de 343 à 405°C (650° à 760°F), une pression d'hydrogène de 6,89 à 17,2 MPa (1000 à 2500 Psi), une LHSV (vitesse spatiale horaire linéaire) de 0,2 à 4 et un taux d'addition d'hydrogène de 356 à 3560 $m^3/m^3$ (2000 à 20000 SCFB).

9. Procédé selon la revendication 7, dans lequel les conditions de dénitruration sont des conditions d'hydrocraquage de dénitruration et comprennent une température de 382 à 438°C (720° à 820°F), une pression d'hydrogène de 6,89 à 17,2 MPa (1000 à 2500 Psi) une LHSV (vitesse spatiale horaire linéaire) de 0,2 à 3 et un taux d'addition d'hydrogène de 712 à 3560 $m^3/m^3$ (4000 à 20000 SCFB).

10. Procédé selon la revendication 7, dans lequel le métal d'hydrogénation du composant métallique actif comprend au moins un métal du groupe VIB ou VIII.

11. Procédé selon la revendication 10, dans lequel le composant zéolite cristalline formant tamis moléculaire comprend une zéolite cristalline aluminosilicatée du type Y ultra stable, une zéolite borosilicatée cristalline du type AMS ou une zéolite cristalline aluminosilicatée du type ZSM.

12. Procédé selon la revendication 11, dans lequel le métal hydrogénant du composant métallique actif comprend du nickel-molybdène, du chrome-molybdène-cobalt ou du chrome-molybdène-nickel.

13. Procédé selon la revendication 12, dans lequel le composant support comprend une dispersion de zéolite cristalline aluminosilicatée du type Y ultra stable dans l'alumine ou la silice-alumine.

14. Procédé selon l'une quelconque des revendications 7—13, dans lequel la charge à teneur élevée en azote comprend une huile de schiste complète ou une fraction d'huile de schiste.

15. Composition catalytique comprenant (1) un composant métallique actif comprenant au moins un métal ayant une activité de conversion d'hydrocarbures et au moins un composant oxygéné du phosphore; et (2) un composant support comprenant au moins un composant matrice d'oxyde minéral réfractaire poreuse, non-zéolitique, et au moins un composant zéolite cristalline, sélective de forme, formant tamis moléculaire.

16. Composition selon la revendication 15, dans laquelle le composant zéolite cristalline, sélective de forme, formant tamis moléculaire comprend une zéolite cristalline borosilicatée.

17. Composition selon la revendication 15, dans laquelle le métal ayant une activité de conversion d'hydrocarbure comprend au moins un métal du groupe IB, II, IIIB—VIIB ou VIII.

18. Composition selon la revendication 17, dans laquelle le composant métallique actif comprend au moins un métal ayant une activité d'hydrogénation.

19. Composition selon la revendication 15, dans laquelle le composant oxygéné du phosphore est présent en une quantité allant de 0,1 à 20% en poids, exprimée en tant que $P_2O_5$, et basée sur le poids total de la composition.

20. Composition selon la revendication 17, dans laquelle le métal ayant une activité de conversion d'hydrocarbures comprend au moins un métal d'hydrogénation choisi dans le groupe constitué par le chrome, le molybdène, le tungstène, le fer, le cobalt et le nickel.

21. Composition selon la revendication 15, dans laquelle (1) le composant métallique actif comprend de 5 à 35 % en poids d'au moins un métal hydrogénant et de 0,5 à 15 % en poids d'au moins un composant oxygéné du phosphore, exprimé en tant que $P_2O_5$ et (2) le composant support comprend de l'alumine, de la silice ou une combinaison d'alumine et de silice et au moins un composant zéolite cristalline formant tamis moléculaire comprenant une zéolite cristalline borosilicatée.

22. Procédé pour l'hydrocraquage ménageant de charges d'hydrocarbures comportant l'étape de mise en contact de la charge avec de l'hydrogène dans des conditions d'hydrocraquage ménageant en présence de la composition catalytique de l'une quelconque des revendications 15 à 21.

23. Procédé selon la revendication 22, dans lequel le composant support comprenant au moins un

composant matrice d'oxyde minéral réfractaire poreuse non-zéolitique est choisi dans le groupe constitué par l'alumine, la silice, la zircone, le dioxyde de titane, la magnésie et leurs combinaisons.

24. Procédé selon la revendication 22 dans lequel la charge d'hydrocarbure est constitué par un distillat de pétrole ou d'huile synthétique brute ayant un point d'écoulement de 10 à 66°C (50° à 150°F) et contenant jusqu'à 5 % en poids de soufre, 0,5 % en poids d'azote et 0,5 % en poids d'oxygène.

25. Procédé selon la revendication 22, dans lequel les conditions d'hydrocraquage ménageant comprennent une température de 343 à 427°C (650° à 800°F), une pression d'hydrogène de 3,45 à 17,2 MPa (500 à 2500 Psi) une LHSV (vitesse spatiale horaire linéaire) de 0,2 à 5 heures réciproques et un taux d'addition d'hydrogène entre 278 et 3560 $m^3/m^3$ (1000 à 20000 SCFB).

26. Procédé selon la revendication 25, dans lequel le métal hydrogénant du composant métallique actif comprend un métal du groupe VIB ou VIII.

27. Procédé selon la revendication 26, dans lequel le composant zéolite cristalline, de forme sélective, formant tapis moléculaire, comprend une zéolite cristalline borosilicatée du type AMS ou une zéolité cristalline aluminosilicatée du type ZSM.

28. Procédé selon la revendication 26, dans lequel le métal hydrogenant comprend le nickel et le molybdène.

29. Procédé pour l'hydrocraquage ménageant de charges d'hydrocarbures comportant la mise en contact de la charge avec l'hydrogène dans des conditions d'hydrocraquage ménageant en présence de la composition catalytique de la revendication 15, dans lequel le composant zéolite cristalline, de forme sélective, formant tamis moléculaire comprend une zéolite cristalline borosilicatée HAMS-1B.

30. Procédé selon l'une quelconque des revendications 26 à 29, dans lequel les conditions d'hydrocraquage ménageant sont des conditions d'hydrocraquage ménageant de déparaffinage et comprennent une température de 343 à 427°C (650° à 800°F) une pression d'hydrogène de 5,51 à 17,2 MPa (800 à 2500 Psi) une LHSV (vitesse psatiale horaire linéaire) de 0,2 à 5 heures réciproques et un taux d'addition d'hydrogène de 278 à 3560 $m^3/m^3$ (1000 à 20000 SCFB).

31. Procédé selon l'une quelconque des revendications 26 à 29, dans lequel les conditions d'hydrocraquage ménageant sont les conditions d'hydrocraquage ménageant de craquage catalytique de charge et comprennent une température de 343 à 405°C (650° à 770°F), une pression d'hydrogène de 3,45 à 13,8 MPa (500 à 2000 Psi) une LHSV (vitesse spatiale horaire linéaire) de 0,2 à 4 heures réciproques et un taux d'addition d'hydrogène de 278 à 3560 $m^3/m^3$ (1000 à 20000 SCFB).

32. Procédé pour la production d'un substrat d'huile de lubrification ayant un indice de viscosité élevée, un point d'écoulement bas et une bonne stabilité comportant la mise en contact d'une charge d'hydrocarbure avec de l'hydrogène à une température de 371 à 427°C (700° à 800°F) une pression d'hydrogène de 8,27 à 13,8 MPa (1200 à 2000 Psi), une LHSV (vitesse spatiale horaire linéaire) de 0,2 à 2 heures réciproques et 356 à 1780 $m^3/m^3$ (2000 à 10000 SCFB) d'hydrogène en présence de la composition catalytique de la revendication 15, comprenant le composant métallique actif constitué par 1 à 7 % en poids de NiO, et de 10 à 20 % en poids de $MoO_3$ et de 0,1 à 5 % en poids du composant oxygéné du phosphore, exprimé en tant que $P_2O_5$ et le composant support consistant en une dispersion de 15 à 35 % en poids de zéolite cristalline borosilicatée, de forme sélective, du type AMS dans 65 à 85 % en poids d'un composant matrice d'oxyde minéral réfractaire poreuse, non-zéolitique comprenant de l'alumine.

33. Procédé selon la revendication 32, dans lequel la charge d'hydrocarbure est un distillat de pétrole ou d'huile synthétique brute ayant un point d'écoulement de 10 à 66°C (50° à 150°F) et contenant jusqu'à 5% de soufre, 0,5 % d'azote et/ou 0,5 % en poids d'oxygène.

34. Procédé pour la préparation de la composition catalytique de la revendication 15 comportant l'imprégnation d'un composant support comprenant au moins un composant matrice d'oxyde minéral réfractaire non-zéolitique et au moins un composant zéolite crystalline tolérante aux acides, formant tamis moléculaire, comprenant une zéolite cristalline borosilicatée avec des précurseurs d'un composant métallique actif comprenant au moins un métal ayant une activité de conversion d'hydrocarbure et au moins un composant oxygéné du phosphore dans des conditions efficaces pour conserver une cristallinité substantielle de la zéolite, et la calcination du produit d'imprégnation résultant.

35. Procédé selon la revendication 34, dans lequel les précurseurs du composant métallique actif comprennent de l'acide phosphorique ou un sel de ce dernier ayant un pH d'au moins 2, le composant support étant imprégné d'un tel acide phosphorique ou sel simultanément avec, ou consécutivement à l'imprégnation avec au moins un précurseur métallique.